(19) Europäisches Patentamt
European Patent Office
Office européen des brevets

(11) EP 3 162 839 A1

(12) **EUROPEAN PATENT APPLICATION**
published in accordance with Art. 153(4) EPC

(43) Date of publication:
**03.05.2017 Bulletin 2017/18**

(21) Application number: **15815458.3**

(22) Date of filing: **30.06.2015**

(51) Int Cl.:
***C08G 75/02*** *(2016.01)*

(86) International application number:
**PCT/JP2015/003286**

(87) International publication number:
**WO 2016/002210 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.06.2014 JP 2014134152**
**27.08.2014 JP 2014172348**

(71) Applicant: **Toray Industries, Inc.**
**Tokyo 103-8666 (JP)**

(72) Inventors:
- **TAKECHI, Shingo**
**Nagoya-shi**
**Aichi 455-8502 (JP)**
- **ODASHIMA, Tomoyuki**
**Nagoya-shi**
**Aichi 455-8502 (JP)**
- **HORIUCHI, Shunsuke**
**Nagoya-shi**
**Aichi 455-8502 (JP)**

(74) Representative: **Webster, Jeremy Mark et al**
**Mewburn Ellis LLP**
**City Tower**
**40 Basinghall Street**
**London EC2V 5DE (GB)**

# (54) POLYARYLENE SULFIDE AND METHOD FOR MANUFACTURING SAME

(57) An object is to provide an industrially useful polyarylene sulfide that has a narrow distribution of molecular weight, a high molecular weight, a high purity and a high thermal oxidation resistance, and a manufacturing method of such a polyarylene sulfide. There is provided a polyarylene sulfide configured to satisfy (1) to (4): (1) having a weight-average molecular weight of not less than 10000; (2) having a polydispersity of not greater than 2.5, wherein the polydispersity is expressed by a ratio of the weight-average molecular weight to a number-average molecular weight; (3) having a weight reduction on heating that satisfies an expression of $\Delta Wr = (W1 - W2)/ W1 \times 100 \leq 0.18(\%)$ (where $\Delta Wr$ denotes a weight reduction ratio (%) and is a value calculated from a sample weight (W2) at temperature reaching 330°C relative to a sample weight (W1) at temperature reaching 100°C in thermogravimetric analysis at a temperature rise rate of 20°C/ minute in a non-oxidizing atmosphere at ordinary pressure); and (4) having a nitrogen content of not greater than 200 ppm.

EP 3 162 839 A1

## Description

### Technical Field

The present application claims priority from Japanese Patent Application No. 2014-134152 filed on June 30, 2014 and Japanese Patent Application No. 2014-172348 filed on August 27, 2014, the entireties of disclosures of which are hereby incorporated by reference into this application.

The present invention relates to an industrially useful polyarylene sulfide having a narrow distribution of molecular weight, a high molecular weight, a high purity and a high thermal oxidation resistance, and a method of manufacturing the polyarylene sulfide having such advantages.

### Related Art

Polyarylene sulfide (hereinafter may be abbreviated as PAS) such as polyphenylene sulfide is a resin having favorable characteristics as the engineering plastic, for example, a high heat resistance, a good barrier property, a high chemical resistance, a good electric insulation property, a high moist heat resistance and a high flame retardancy. The PAS is moldable to various molded components, films, sheets, fibers and the like by injection molding or extrusion molding and is widely used in the fields requiring the heat resistance and the chemical resistance, for example, various electric and electronic components, mechanical components and automobile components.

### Citation List

### Patent Literature

Patent Literature 1: WO 2013/147141
Patent Literature 2: WO 2010/074482
Patent Literature 3: JP H05-163349A
Patent Literature 4: US Patent No. 5,869,599
Patent Literature 5: WO 2007-034800

### Summary

### Technical Problem

A proposed concrete method manufactures the PAS by reaction of an alkali metal sulfide such as sodium sulfide with a polyhalogenated aromatic compound such as p-dichlorobenzene in an organic amide solvent such as N-methyl-2-pyrrolidone. This method is widely used as the industrial manufacturing method of PAS. This manufacturing method, however, needs the reaction under the high temperature, high pressure and strong alkali conditions. Additionally, this manufacturing method requires an expensive high-boiling point polar solvent such as N-methyl-2-pyrrolidone. This manufacturing method accordingly has problems, e.g., the high energy consumption type requiring a large cost for recovery of the solvent and the need for a high processing cost.

Additionally, the PAS obtained by this method is a polymer that includes a large amount of a low-molecular weight content and has a high polydispersity that is expressed by the ratio of the weight-average molecular weight to the number-average molecular weight and a wide distribution of molecular weight. Accordingly employing the PAS obtained by this method for the applications of molding process causes problems, for example, a large amount of gas generation on heating and a large amount of eluted component when the PAS is exposed to a solvent.

This method obtains the PAS by reaction of a sulfur source with a dihalo aromatic compound in an organic amide solvent in the presence of an alkali metal hydroxide. The obtained PAS, however, has a low thermal oxidation resistance and causes a problem, i.e., reduction of the elongation rate, the flexural modulus and the impact resistance by oxidation that lead to the brittleness. A cross-linkage-introduced PAS resin obtained by this method has the high shear rate dependency and the high temperature dependency of melt viscosity and has low molding processability.

For the purpose of solving these problems, for example, Patent Literature 1 discloses a purification method by extraction of impurity in the presence of a phase separating agent. This method performs polymerization of PAS in the presence of a disulfide with addition of a reduced amount of an alkali metal hydroxide and subsequently sifts out generated polymers with a sieve having a specified aperture. The PAS obtained by this method is expected to have a narrow polydispersity, a reduced amount of gas generation and a reduced nitrogen content. These effects are, however, still at

the insufficient levels.

Another disclosed method obtains PAS by reaction of a diiodo aromatic compound with a sulfur compound (see, for example, Patent Literature 2). This method does not use any organic amide solvent and accordingly provides PAS having a low nitrogen content. The resulting PAS has, on the other hand, a wide polydispersity. Additionally, the resulting PAS has disulfide bonding and accordingly has an insufficient thermal stability. This causes a problem that the mechanical properties are likely to be deteriorated under a high temperature environment.

Other disclosed methods of manufacturing PAS include a method that uses a cyclic PAS oligomer as the raw material and obtains a high molecular-weight PAS by ionic ring-opening polymerization and a method that obtains a high molecular-weight PAS by heating in the presence of a polymerization catalyst that produces sulfur radical (see, for example, Patent Literatures 3 and 4). The PAS obtained by either of these manufacturing methods is described to have a narrow distribution of molecular weight but has a problem, i.e., a large amount of gas generation caused by the polymerization catalyst.

Another disclosed method obtains a high molecular-weight PAS by heating a cyclic PAS oligomer without using a polymerization catalyst (see, for example, Patent Literature 5). The PAS obtained by this method is described to have a narrow distribution of molecular weight and a small amount of gas generation. The cyclic PAS used as the raw material is, however, obtained by extraction from a PAS prepared in an organic amide solvent and thereby includes a nitrogen-containing compound. The PAS obtained by this method thus naturally contains the raw material-derived nitrogen and accordingly has a low thermal oxidation resistance. There is accordingly a demand for further reduction of the nitrogen content.

An object is to provide an industrially useful polyarylene sulfide having a narrow distribution of molecular weight, a high molecular weight, a high purity or more specifically a low nitrogen content, and a high thermal oxidation resistance, and a method of manufacturing the polyarylene sulfide having such advantages.

Solution to Problem

The invention may be implemented by the following aspects, in order to solve the above problems.

[1] A polyarylene sulfide configured to satisfy (1) to (4):

(1) having a weight-average molecular weight of not less than 10000;
(2) having a polydispersity of not greater than 2.5, wherein the polydispersity is expressed by a ratio of the weight-average molecular weight to a number-average molecular weight;
(3) having a weight reduction on heating that satisfies an expression given below:

$$\Delta Wr = (W1 - W2)/ W1 \times 100 \leq 0.18(\%)$$

(where $\Delta Wr$ denotes a weight reduction ratio (%) and is a value calculated from a sample weight (W2) at temperature reaching 330°C relative to a sample weight (W1) at temperature reaching 100°C in thermogravimetric analysis at a temperature rise rate of 20°C/ minute in a non-oxidizing atmosphere at ordinary pressure); and
(4) having a nitrogen content of not greater than 200 ppm.

[2] The polyarylene sulfide according to [1], the polyarylene sulfide further satisfying an expression given below:

$$\Delta MFR = MFR1/ MFR2 \times 100 \leq 200(\%)$$

(where $\Delta MFR$ denotes a change rate in melt flow rate (hereinafter referred to as MFR) and is a value calculated from a melt flow rate (MFR1) without oxidation treatment and a melt flow rate (MFR2) after oxidation treatment (230°C under atmosphere for 6 hours) in measurement of MFR (g/ 10 min) under application of a load of 5 kg after heating at 315.5°C under atmosphere at ordinary pressure for 5 minutes, and the measurement of MFR is performed under a load of 5 kg at a temperature of 315.5°C in conformity with ASTMD-1238-70).
[3] The polyarylene sulfide according to [1] or [2], the polyarylene sulfide including substantially no halogen other than chlorine.
[4] A manufacturing method of a polyarylene sulfide, comprising:

a process of heating a polyarylene sulfide prepolymer, so as to convert the polyarylene sulfide prepolymer into a high polymer having a weight-average molecular weight of not less than 10000, wherein
the polyarylene sulfide prepolymer includes at least not less than 50% by weight of a cyclic polyarylene sulfide (a) obtained through a process 1b and/or a process 2 and has a weight-average molecular weight of less than 10000, wherein
a process 1a denotes a process that causes at least a sulfidizing agent (b) and a dihalogenated aromatic compound (c) to be exposed to each other in a nitrogen-containing organic polar solvent (d), so as to obtain the cyclic polyarylene sulfide (a);
the process 1b denotes a process that performs the process 1a with addition of 0.95 to 1.04 mol of an alkali metal hydroxide (e) relative to 1 mol of the sulfidizing agent (b); and
the process 2 denotes a process that adds an alkaline solution (e) or an acid solution (f) different from the nitrogen-containing organic polar solvent (d) to a solution of the nitrogen-containing organic polar solvent (d) including at least the cyclic polyarylene sulfide (a) obtained through the process 1a or the process 1b, so as to recover the cyclic polyarylene sulfide (a) as a solid content.

[5] The manufacturing method of the polyarylene sulfide according to [4],
wherein an amount of the nitrogen-containing organic polar solvent (d) used in the process 1a is between 1.25 liters and 50 liters inclusive per 1 mol of a sulfur content in a reaction mixture that is reacted in the process 1a.
[6] The manufacturing method of the polyarylene sulfide according to either [4] or [5], the manufacturing method further comprising:

a process of recovering a solution including at least the cyclic polyarylene sulfide (a) by solid-liquid separation of a reaction mixture obtained by the process 1a at temperature of not higher than a reflux temperature of the nitrogen-containing organic polar solvent (d) at ordinary pressure.

[7] The manufacturing method of the polyarylene sulfide according to any one of [4] to [6],
wherein the nitrogen-containing organic polar solvent (d) is an organic amide solvent.
[8] The manufacturing method of the polyarylene sulfide according to any one of [4] to [7],
wherein the alkaline solution (e) is a solution including an alkali metal hydroxide or an alkaline earth metal hydroxide.
[9] The manufacturing method of the polyarylene sulfide according to any one of [4] to [7],
wherein the acid solution (f) is a solution including an inorganic acid or a carboxylic acid.
[10] The manufacturing method of the polyarylene sulfide according to any one of [4] to [9],
wherein a solvent of the alkaline solution (e) or the acid solution (f) is a protic solvent.
[11] The manufacturing method of the polyarylene sulfide according to any one of [4] to [10], the manufacturing method further comprising:

a process of performing solid-liquid separation of the cyclic polyarylene sulfide (a) after adding the alkaline solution (e) or the acid solution (f).

Advantageous Effects

The invention provides an industrially useful polyarylene sulfide that has a narrow distribution of molecular weight, a high molecular weight, a high purity and a high thermal oxidation resistance and also provides a method of manufacturing the polyarylene sulfide having such advantages.

Description of Embodiments

The following describes embodiments of the invention.

(1) Polyarylene Sulfide

The polyarylene sulfide according to an embodiment of the invention has a repeating unit expressed by a formula -(Ar-S)- consisting of an arylene group (hereinafter may be abbreviated as Ar) and a sulfide, as the main building block. The polyarylene sulfide of the embodiment is a homopolymer or a copolymer preferably containing not less than 80 mol% of this repeating unit. Ar may be any of units expressed by Formula (A) to Formula (K) given below. Among them, Formula (A) is especially preferable.

[Chem. 1]

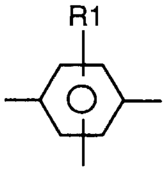

...(A)

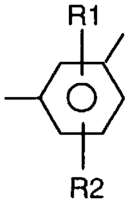

...(B)

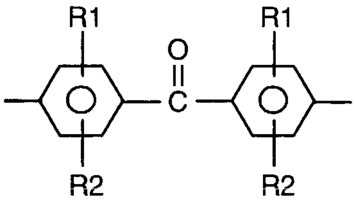

...(C)

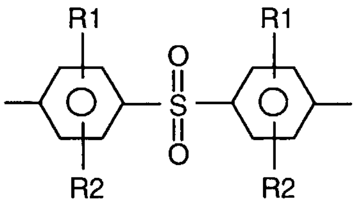

...(D)

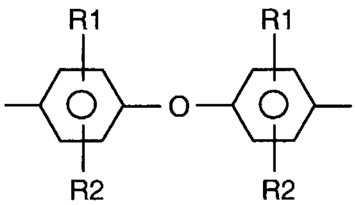

...(E)

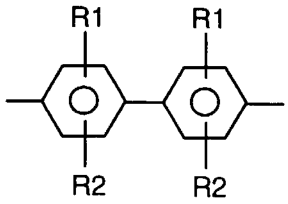

...(F)

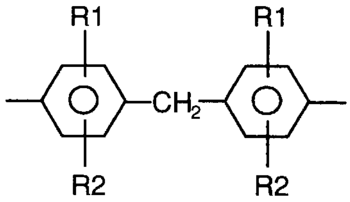

...(G)

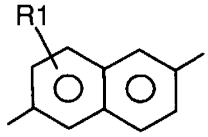

...(H)

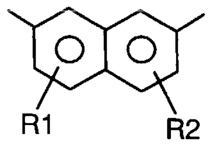

...(I)

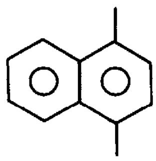

...(J)

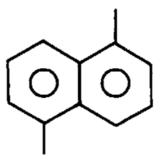

...(K)

(where each of R1 and R2 represents a substituent group selected from the group consisting of hydrogen, alkyl groups containing 1 to 12 carbon atoms, alkoxy groups containing 1 to 12 carbon atoms, arylene groups containing 6 to 26 carbon atoms and halogen groups, and R1 and R2 may be identical with each other or may be different from each other).

As long as the polyarylene sulfide has this repeating unit as the main building block, the polyarylene sulfide may include a small amount of a branch unit or a crosslinking unit expressed by, for example, any of Formula (L) to Formula (N) given below. A copolymerization amount of such a branch unit or crosslinking unit is preferably in a range of 0 to 1 mol% relative to 1 mol of the -(Ar-S)- unit.

[Chem. 2]

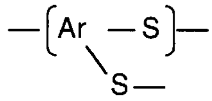 ...(L)

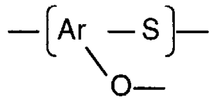 ...(M)

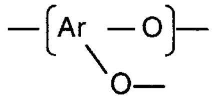 ...(N)

The PAS according to the embodiment of the invention may be a random copolymer or a block copolymer including the above repeating unit or may be a mixture thereof.

Typical examples of the PAS according to the embodiment of the invention include polyarylene sulfide sulfone, polyarylene sulfide ketone, their random copolymers, their block copolymers and mixtures thereof, in addition to PAS. An especially preferable PAS is PAS that contains not less than 80 mol% or more specifically not less than 90 mol% of p-arylene sulfide unit given below as the main building block of the polymer.

[Chem. 3]

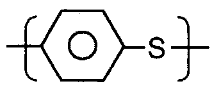

The molecular weight of the PAS according to the embodiment of the invention is, for example, not less than 10000, is preferably not less than 15000 and is more preferably not less than 18000 as the weight-average molecular weight. The weight-average molecular weight of not less than 10000 enhances the moldability in processing and improves the properties such as mechanical strength and chemical resistance of a molded product. There is no specific limitation on the upper limit of the weight-average molecular weight. The upper limit is, for example, preferably in a range of less than 1,000,000, is more preferably in a range of less than 500,000 and is furthermore preferably in a range of less than 200,000. The weight-average molecular weight in this range provides the high molding processability.

The distribution of the molecular weight of the PAS according to the embodiment of the invention, i.e., the polydispersity expressed as a ratio of the weight-average molecular weight to the number-average molecular weight (weight-average molecular weight/ number-average molecular weight) is, for example, not higher than 2.5, is more preferably not higher than 2.3, is furthermore preferably not higher than 2.1 and is especially preferably not higher than 2.0. The preferable lower limit of the polydispersity is 1.0. This means that PAS has a single molecular weight. The theoretical lower limit of the polydispersity is 1.0, but the PAS according to the embodiment of the invention generally has the polydispersity of not lower than 1.5. The polydispersity of not higher than 2.5 is more likely to reduce the low-molecular weight content included in the PAS. This is likely to achieve, for example, improvement in the mechanical properties when the PAS is used in the applications of molding process, reduction in the amount of gas generation on heating, and reduction in the amount of eluted component when the PAS is exposed to a solvent. The weight-average molecular weight and the number-average molecular weight described above are values determined by using SEC (size exclusion chromatography) equipped with a differential refractive index detector.

The significant characteristic of the PAS according to the embodiment of the invention is that a weight reduction on heating satisfies Expression (I) given below:

$$\Delta Wr = (W1 - W2) / W1 \times 100 \leq 0.18(\%) \qquad (I)$$

ΔWr herein denotes a weight reduction ratio (%) and is a value calculated from a sample weight (W2) at temperature reaching 330°C relative to a sample weight (W1) at temperature reaching 100°C in thermogravimetric analysis at a temperature rise rate of 20°C/ minute from 50°C to 350°C in a non-oxidizing atmosphere at ordinary pressure.

The PAS according to the embodiment of the invention has ΔWr that is, for example, not higher than 0.18%,

is preferably not higher than 0.12%, is more preferably not higher than 0.10% and is furthermore preferably not higher than 0.085%. There is no specific lower limit of ΔWr, and the lower ΔWr is more preferable. When a concrete numerical value is provided as an example, the lower limit of this ΔWr may be 0.001%. ΔWr of not higher than 0.18% is preferable since this is likely to reduce the amount of gas generation, for example, in the molding process of PAS, and is also preferably likely to reduce the deposits, for example, on a spinneret and a die in extrusion molding or on a mold in injection molding and thereby enhance the productivity. To the best of the inventors' knowledge, the known PAS has ΔWr of higher than 0.18%. The PAS obtained by a preferable manufacturing method according to the embodiment of the invention, however, has a different distribution of molecular weight and a different impurity content from those of the known PAS and has an extremely high purity. This is expected to cause significant reduction in the value of ΔWr.

ΔWr may be determined by general thermogravimetric analysis. The atmosphere employed in this analysis is a non-oxidizing atmosphere at ordinary pressure. The non-oxidizing atmosphere herein indicates an atmosphere having the oxygen concentration of not higher than 5% by volume in the gas phase to which a sample is exposed, preferably an atmosphere having the oxygen concentration of not higher than 2% by volume and more preferably an atmosphere that contains substantially no oxygen, i.e., an inert gas atmosphere such as nitrogen, helium or argon. Among them, nitrogen atmosphere is especially preferable as the non-oxidizing atmosphere, in terms of the economic efficiency and the ease of handling. The ordinary pressure herein indicates a pressure in the approximately standard state of the atmosphere. The standard state herein is not unequivocally determined due to the influence of measurement environment but may be an atmospheric condition of 101.3 kPa as the absolute pressure at the temperature of 25°C. In a measurement atmosphere other than the atmosphere described above, there is a possibility that the measurement does not provide the result in conformity with the actual use of PAS, for example, the occurrence of oxidation of PAS during measurement or a significant difference from the atmosphere actually used in the molding process of PAS.

ΔWr may be determined from measurement of the sample weight at the temperature reaching 100°C and the sample weight at the temperature reaching 330°C by thermogravimetric analysis that keeps the temperature at 50°C for 1 minute and subsequently increases the temperature from 50°C to 350°C at a temperature rise rate of 20°C/ minute. This temperature range is a temperature range frequently employed in the actual use of PAS such as polyphenylene sulfide and is also a temperature range frequently employed in the process of melting PAS in the solid state and subsequently molding the melted PAS into an arbitrary shape. The weight reduction ratio in such an actual use temperature range is related to the amount of gas generation from the PAS in the actual use and the amount of deposits on, for example, a spinneret or a mold in the molding process. The PAS having the lower weight reduction ratio in this temperature range is thus regarded as the better PAS having the higher quality. An approximately 10 mg of the sample may be used for measurement of ΔWr, and the shape of the sample may be fine particles of 2 mm or smaller.

The reason why the PAS according to the embodiment of the invention provides such an extremely good thermogravimetric property that the weight reduction ratio of the PAS on heating satisfies Expression (I) given above is not clear at the moment. This may, however, be attributable to that the PAS according to the embodiment of the invention has a low impurity content other than the PAS content and more specifically a low nitrogen content and thereby provides a significantly low weight reduction ratio that is not achievable in the known PAS.

The PAS having the characteristic expressed by Expression (I) given above is preferably manufactured by heating a PAS prepolymer including a cyclic PAS (a) so as to convert the PAS prepolymer into a high polymer as described later. The conversion into the high polymer will be described later in detail. The weight fraction of the cyclic PAS (a) included in a resulting PAS obtained by the operation for converting the PAS prepolymer into the high polymer is preferably not higher than 40%. This weight fraction is more preferably not higher than 25% and is furthermore preferably not higher than 15%. This weight fraction is correlated to the value of ΔWr described above. The lower weight fraction is more preferable since this provides the especially smaller value of ΔWr. The weight fraction exceeding the above range is likely to increase the value of ΔWr. This reason is not clear at the moment but may be attributable to volatilization of part of the cyclic PAS (a) included in the PAS in the heating process.

As described above, the PAS according to the embodiment of the invention has the excellent characteristic of the low ΔWr that denotes a weight loss on heating when the temperature of the PAS is increased. The PAS according to the embodiment of the invention is also likely to have the excellent characteristic of the low weight loss on heating when the temperature of the PAS is kept at an arbitrary fixed temperature.

The PAS according to the embodiment of the invention is also characterized by the smaller nitrogen content than that of the conventional PAS. More specifically, the upper limit of the nitrogen content is, for example, not higher than 200 ppm, is preferably not higher than 190 ppm, is more preferably not higher than 175 ppm, is furthermore preferably not higher than150 ppm and is especially preferably not higher than 100 ppm. The lower nitrogen content is more preferable, and there is no limitation on the lower limit. When a concrete numerical value is provided as an example, the lower limit of the nitrogen content may be approximately 1 ppm. The nitrogen content of not less than 200 ppm is likely to reduce the melt stability and is also likely to obviously deteriorate the processability and the stability of the mechanical properties after the melt processing. The nitrogen content of not higher than 200 ppm is, on the other hand, likely to provide, for example, the high melt stability and the good processability and is also likely to provide an extremely

little change in mechanical properties after the melt processing and readily maintain the high quality. The above preferable range provides the extremely high melt stability and does not cause deterioration of the mechanical properties by the melt processing. This reason is not clear at the moment but may be attributable to that a nitrogen-containing compound accelerates oxidative cross-linkage and that reduction in the amount of the nitrogen-containing compound suppresses oxidative cross-linkage.

The nitrogen content according to the embodiment of the invention denotes a sum of the nitrogen content included in the polymer molecule but does not include the amount of nitrogen derived from a nitrogen-containing solvent and derived from an additive included in the polymer. The nitrogen content may be evaluated by nitrogen elemental analysis and may be determined, for example, by measuring the amount of nitrogen monoxide produced by thermal decomposition and oxidation of a sample according to a method described below, with a nitrogen detector. When the polymer includes a nitrogen-containing solvent and an additive, an evaluation procedure may measure the total nitrogen content including the nitrogen-containing solvent and the additive, perform quantitative analysis of each component by a known method suitable for the component such as high-performance liquid chromatography or gas chromatography after pretreatment such as extraction as appropriate, and specify a difference between the total nitrogen content analyzed by the above method and the quantitative value as the nitrogen content of the polymer according to the embodiment of the invention.

According to a preferable aspect of the embodiment of the invention, the cyclic PAS (a) used as the raw material is obtained by a reaction in a nitrogen-containing organic polar solvent. There is accordingly a possibility that the nitrogen-containing organic polar solvent remains in the cyclic PAS (a). The cyclic PAS (a) is, however, heated at the temperature over the boiling point of the nitrogen-containing organic polar solvent at ordinary pressure in the process of manufacturing PAS. Even when the nitrogen-containing organic polar solvent remains in the cyclic PAS (a), such heating volatilizes the nitrogen-containing organic polar solvent and provides a polymer without containing the nitrogen-containing organic polar solvent. When an additive is added, the nitrogen content is increased by the amount of nitrogen derived from the additive. An evaluation procedure may measure the total nitrogen content including the nitrogen-containing solvent and the additive, analyze the amount of each component in the additive by the operation such as extraction described above and evaluate the nitrogen content of the polymer that is a difference between the total nitrogen content analyzed by the above method and the quantitative value.

In the measurement, as the characteristic of the PAS according to the embodiment of the invention, it is preferable that an MFR change rate ΔMFR between MFR before oxidation treatment and MFR after the oxidation treatment satisfies Expression (II) given below:

$$\Delta MFR = MFR1 / MFR2 \times 100 \leq 200(\%) \qquad (II)$$

MFR according to the embodiment of the invention denotes a value measured by an MFR measurement method that is described later in Examples and is in conformity with ASTM D-1238-70 (the temperature of 315.5°C, the load of 5000 g, the orifice having the pore length of 8.00 mm and the pore diameter of 2.095 mm, the sample amount of 7g and the preheating time of 5 minutes after feeding the sample and before starting the measurement). In the measurement, the PAS particulate having a predetermined particle diameter described later is subjected to oxidation treatment in the atmosphere at 230°C for 6 hours. MFR1 denotes MFR before the oxidation treatment, and MFR2 denotes MFR after the oxidation treatment.

The PAS according to the embodiment of the invention has ΔMFR that is preferably not higher than 200%, is more preferably not higher than 180% and is furthermore preferably not higher than 160%. The higher viscosity provides the lower MFR, so that ΔMFR is increased by thickening. The PAS having ΔMFR in the above range is preferably used since ΔMFR in this range suggests only little thickening and suppresses deterioration of the mechanical properties after the melt processing.

A preferable lower limit of ΔMFR is 100%. ΔMFR equal to 100% means no change in the MFR value by the oxidation treatment. In principle, ΔMFR becomes lower than 100% when the heat treatment at 230°C causes degradation of PAS and decreases the viscosity. The PAS according to the embodiment of the invention, however, has good heat resistance and is thus generally unlikely to be degraded by the heat treatment at 230°C under the above oxidation conditions. The preferable lower limit of ΔMFR according to the embodiment of the invention is accordingly 100%.

To the best of the inventors' knowledge, the known PAS has ΔMFR that is higher than 300%. The PAS according to the embodiment of the invention, however, has ΔMFR that is not higher than 200%. This may be attributable to suppression of oxidative cross-linkage by a low impurity content and a low nitrogen content in the PAS.

The PAS particulate according to the embodiment of the invention indicates particles of PAS having the particle diameter of 2.00 to 1.70 mm. There is no specific limitation in the method of obtaining the particulate having the particle diameter of 2.00 to 1.70 mm. For example, the particulate having the particle diameter of 2.00 to 1.70 mm may be

obtained by a dry mechanical sieving method that uses sieves having the apertures of 4.75 mm, 2.36 mm, 2.00 mm, 1.70 mm and 1.18 mm (all in cylindrical shape of 75 mm in diameter) and a vibrating sieve shaker (manufactured by AS ONE Corporation, trade name of compact vibrating sieve shaker MVS-1). More specifically, an employable method may stack the sieves such that the sieve having the larger aperture is located on the upper level, place 20 g of particles to be measured in the uppermost sieve, and shake the particles for 10 minutes with the vibrating sieve shaker.

It is also preferable that the PAS according to the embodiment of the invention includes substantially no halogen other than chlorine or more specifically does not include any of fluorine, bromine and iodine. Even when the PAS according to the embodiment of the invention contains chlorine as the halogen, chlorine is stable in a temperature range where the PAS is generally used. Containing a little amount of chlorine accordingly has little effect on the mechanical properties of the PAS. Compared with in the case where the PAS according to the embodiment of the invention contains a halogen other than chlorine, in the case where the PAS according to the embodiment of the invention contains chlorine as the halogen, the unique characteristic of the halogen is unlikely to affect the properties of the PAS, for example, the electric properties and the melt stability. When the PAS according to the embodiment of the invention contains chlorine as the halogen, the content of chlorine is preferably not higher than 1% by weight, is more preferably not higher than 0.5% by weight, is furthermore preferably not higher than 0.2% by weight and is especially preferably not higher than 0.08% by weight. The content of chlorine in this range is likely to provide the better electric properties and the melt stability of the PAS.

A quantitative method of the halogen may perform ion chromatography analysis in conformity with the oxygen flask combustion method (JEITA ET-7304A) under measurement conditions of the halogen content shown in Examples described later. The state of including substantially no halogen indicates the level of less than the lower limit of quantitation in this quantitative method. The lower limit of quantitation of each halogen in this quantitative method is about 50 ppm.

There is no specific limitation on the melt viscosity of the PAS according to the embodiment of the invention, but a range of 5 to 10000 Pa·s (at 300°C and the shear rate of 1000/ second) is generally provided as a preferable range of the melt viscosity. This melt viscosity may be evaluated by capilograph.

The PAS according to the embodiment of the invention is characterized by the higher purity than the conventional PAS. The content of alkali metal as the impurity is desirably not higher than 100 ppm. The alkali metal content is preferably lower than 50 ppm, is more preferably not higher than 30 ppm and is furthermore preferably not higher than 10 ppm. The alkali metal content of not higher than 100 ppm reduces the possibility that the application of the PAS is limited by, for example, suppressing reduction of the reliability in an application that requires the high electric insulation property. The alkali metal content of the PAS according to the embodiment of the invention may be, for example, a value calculated from the amount of alkali metal included in the ash content that is the residue when the PAS is fired by using an electric oven or the like and may be a value determined by analysis of the ash content by ion chromatography.

The alkali metal indicates lithium, sodium, potassium, rubidium, cesium and francium in group IA in the periodic table. It is, however, preferable that the PAS according to the embodiment of the invention includes no alkali metal other than sodium. Containing an alkali metal other than sodium is likely to adversely affect the electric properties and the thermal properties of the PAS. This is also likely to cause an increase in the amount of metal elution when the PAS is exposed to various solvents. Especially this tendency becomes stronger when the PAS contains lithium. Among various metal species, the alkali metals are likely to have the stronger effects on the electric properties and the thermal properties of the PAS and on the amount of metal elution, compared with metal species other than the alkali metals, for example, alkaline earth metals and transition metals. Among various metal specifies, especially the alkali metal content in the above range is thus expected to improve the quality of the PAS.

(2) Method of Manufacturing PAS

The PAS according to the embodiment of the invention is manufactured by a manufacturing method that includes a process of heating a polyarylene sulfide prepolymer, so as to convert the polyarylene sulfide prepolymer into a high polymer having a weight-average molecular weight of not less than 10000. The polyarylene sulfide prepolymer herein includes at least not less than 50% by weight of a cyclic polyarylene sulfide (a) obtained through a process 1b and/or a process 2 and has a weight-average molecular weight of less than 10000, wherein

a process 1a denotes a process that causes at least a sulfidizing agent (b) and a dihalogenated aromatic compound (c) to be exposed to each other in a nitrogen-containing organic polar solvent (d), so as to obtain the cyclic polyarylene sulfide (a);

the process 1b denotes a process that performs the above process 1a with addition of 0.95 to 1.04 mol of an alkali metal hydroxide (e) relative to 1 mol of the sulfidizing agent (b); and

the process 2 denotes a process that adds an alkaline solution (e) or an acid solution (f) different from the nitrogen-containing organic polar solvent (d) to a solution of the nitrogen-containing organic polar solvent (d) including at least the cyclic polyarylene sulfide (a) obtained through the above process 1a or 1b, so as to recover the cyclic polyarylene sulfide (a) as a solid content.

The following describes preferable aspects with regard to the method of manufacturing the PAS according to the embodiment of the invention.

(2-1) Cyclic PAS

The cyclic PAS (a) according to the embodiment of the invention is a cyclic compound that is expressed by General Formula (O) given below and has a repeating unit of -(Ar-S)- as the main building block. The cyclic PAS (a) according to the embodiment of the invention is a compound that is expressed by General Formula (O) given below and preferably contains not less than 80 mol% of the repeating unit. Ar herein may be a unit expressed by any of Formula (A) to Formula (K) given above. Among them, Formula (A) is especially preferable.

[Chem. 4]

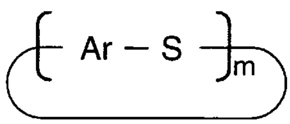

...(O)

The cyclic PAS (a) may include the repeating unit of, for example, any of Formula (A) to Formula (K) given above as the random unit or as the block unit or may be a mixture thereof. Typical examples of the cyclic PAS (a) include cyclic polyphenylene sulfide, cyclic polyphenylene sulfide sulfone, cyclic polyphenylene sulfide ketone, cyclic random copolymers and cyclic block copolymers including any of the preceding compounds and mixtures thereof. An especially preferable cyclic PAS (a) is cyclic polyphenylene sulfide (hereinafter may be abbreviated as cyclic PPS) that contains not less than 80 mol% or more specifically not less than 90 mol% of p-phenylene sulfide unit expressed by the following general formula as the main building block.

[Chem. 5]

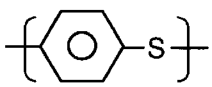

There is no specific limitation on the repeating number m in the above Formula (O) of the cyclic PAS (a). The repeating number m is, however, preferably in a range of not less than 2 and is more preferably in a range of not less than 3. The repeating number m is also preferably in a range of not greater than 50, is more preferably in a range of not greater than 25 and is furthermore preferably in a range of not greater than 20. As described later, conversion of the PAS prepolymer into a high polymer is performed preferably at the temperature of not lower than a melting temperature of the cyclic PAS (a). The larger repeating number m is likely to provide the higher melting temperature of the cyclic PAS (a). The repeating number m in the above range is thus advantageous, in terms of achieving conversion of the PAS prepolymer into a high polymer at the lower temperature.

The cyclic PAS (a) may be a single compound having a single repeating number or a mixture of the cyclic PAS (a) having different repeating numbers. The mixture of the cyclic PAS (a) having the different repeating numbers is likely to have the lower melting temperature than that of the single compound having the single repeating number. Using the mixture of the cyclic PAS (a) having the different repeating numbers is preferable since this further decreases the temperature in the process of conversion into the high polymer.

(2-2) Polyarylene Sulfide Prepolymer

The method of manufacturing the PAS according to the embodiment of the invention is characterized by heating the PAS prepolymer including the cyclic PAS (a) described above so as to convert the PAS prepolymer into a high polymer. The PAS prepolymer includes at least not less than 50% by weight, preferably not less than 70% by weight, more preferably not less than 80% by weight and especially preferably not less than 90% by weight of the cyclic PAS (a). There is no specific limitation on the upper limit of the cyclic PAS (a) included in the PAS prepolymer. The upper limit is, for example, in a range of not greater than 98% by weight and is preferably in a range of not greater than 95% by weight. In general, the higher weight ratio of the cyclic PAS (a) in the PAS prepolymer is likely to provide the higher degree of polymerization of the resulting PAS obtained after heating. In other words, the degree of polymerization of the

obtained PAS may be readily controlled by adjusting the abundance ratio of the cyclic PAS (a) in the PAS prepolymer in the method of manufacturing the PAS according to the embodiment of the invention. The weight ratio of the cyclic PAS (a) in the PAS prepolymer over the above upper limit is likely to increase the melting temperature of the PAS prepolymer. The weight ratio of the cyclic PAS (a) in the PAS prepolymer in the above range is preferable since this further decreases the temperature in the process of conversion of the PAS prepolymer into the high polymer.

It is especially preferable that the component other than the cyclic PAS (a) in the PAS prepolymer is a linear PAS oligomer. The linear PAS oligomer herein has a repeating unit expressed by a formula -(Ar-S)- as the main building block. The linear PAS oligomer is preferably a homo-oligomer or a co-oligomer containing not less than 80 mol% of the repeating unit. Ar may be a unit expressed by any of Formula (A) to Formula (K) given above. Among them, Formula (A) is especially preferable. As long as the linear PAS oligomer has this repeating unit as the main building block, the linear PAS oligomer may include a small amount of a branch unit or a crosslinking unit expressed by, for example, any of Formula (L) to Formula (N) given above. A copolymerization amount of such a branch unit or crosslinking unit is preferably in a range of 0 to 1 mol% relative to 1 mol of the -(Ar-S)-unit. The linear PAS oligomer may be a random copolymer or a block copolymer including the above repeating unit or may be a mixture thereof.

Typical examples of the linear PAS oligomer include polyphenylene sulfide oligomer, polyphenylene sulfide sulfone oligomer, polyphenylene sulfide ketone oligomer, their random copolymers, their block copolymers and mixtures thereof. An especially preferable linear PAS oligomer is linear polyphenylene sulfide oligomer that contains not less than 80 mol% or more specifically not less than 90 mol% of p-phenylene sulfide unit as the main building block of the polymer.

It is especially preferable that the amount of the linear PAS included in the PAS prepolymer is less than the amount of the cyclic PAS (a) included in the PAS prepolymer. More specifically, the weight ratio of the cyclic PAS (a) to the linear PAS in the PAS prepolymer (cyclic PAS (a)/ linear PS) is preferably not less than 1, is more preferably not less than 2.3, is furthermore preferably not less than 4 and is especially preferably not less than 9. Using the PAS prepolymer in this range readily provides the PAS having the weight-average molecular weight of not less than 10,000. Accordingly the higher weight ratio of the cyclic PAS (a) to the linear PAS in the PAS prepolymer is likely to provide the higher weight-average molecular weight of the PAS obtained by the method of manufacturing the PAS according to the embodiment of the invention. There is no specific upper limit on this weight ratio. There is, however, a need for significantly reducing the content of the linear PAS in the PAS prepolymer, in order to obtain the PAS prepolymer having the weight ratio of greater than 100. This requires a lot of labor. The method of manufacturing the PAS according to the embodiment of the invention, however, enables PAS of a sufficiently high molecular weight to be readily obtained by using even the PAS prepolymer having the weight ratio of not greater than 100.

The upper limit of the molecular weight of the PAS prepolymer used in manufacture of the PAS according to the embodiment of the invention is less than 10,000 as the weight-average molecular weight, is preferably not more than 5,000 and is more preferably not more than 3,000. The lower limit of the molecular weight of the PAS prepolymer used in manufacture of the PAS according to the embodiment of the invention is, on the other hand, preferably not less than 300, is more preferably not less than 400 and is furthermore preferably not less than 500.

The PAS according to the embodiment of the invention is characterized by the high purity, and it is preferable to use the PAS prepolymer of high purity for manufacturing. Accordingly the alkali metal content as the impurity is preferably not greater than 100 ppm, is more preferably less than 50 ppm, is furthermore preferably not greater than 30 ppm and is especially preferably not greater than 10 ppm. When the method of heating the PAS prepolymer so as to convert the PAS prepolymer into a high polymer is employed to manufacture the PAS according to the embodiment of the invention, the alkali metal content in the resulting PAS is generally dependent on the alkali metal content in the PAS prepolymer. The alkali metal content in the PAS prepolymer exceeding the above range is thus likely to cause the alkali metal content in the resulting PAS to exceed the range of the alkali metal content in the PAS according to the embodiment of the invention. The alkali metal content in the PAS prepolymer herein may be, for example, a value calculated from the amount of alkali metal included in the ash content that is the residue when the PAS prepolymer is fired using an electric oven or the like and may be quantitatively determined by analysis of the ash content by ion chromatography.

The alkali metal indicates lithium, sodium, potassium, rubidium, cesium and francium in group IA in the periodic table. It is, however, preferable that the PAS prepolymer according to the embodiment of the invention includes no alkali metal other than sodium. It is also preferable that the PAS prepolymer according to the embodiment of the invention includes substantially no halogen other than chlorine.

A quantitative method of the halogen performs ion chromatography analysis in conformity with the oxygen flask combustion method (JEITA ET-7304A) under measurement conditions of the halogen content shown in Examples described later. The state of including substantially no halogen indicates the level of less than the lower limit of quantitation in this quantitative method. The lower limit of quantitation of each halogen in this quantitative method is about 50 ppm.

(2-3) Method of Manufacturing Cyclic Polyarylene Sulfide

The method of manufacturing the PAS according to the embodiment of the invention manufactures the cyclic

PAS (a) obtained through the process 1b performed in the process 1a described later and/or through the process 2. More specifically, according to the embodiment of the invention, there are three combinations "process 1a + process 1b", "process 1a + process 2" and "process 1a + process 1b + process 2". The cyclic PAS (a) of high purity is obtainable through any of these combinations. This provides the characteristic of reducing the nitrogen content of the PAS obtained by heating according to the method described later.

(2-3-1) Sulfidizing Agent

The sulfidizing agent (b) used according to the embodiment of the invention may be a sulfidizing agent that causes a sulfide bond to be introduced into the dihalogenated aromatic compound (c) and/or a sulfidizing agent that acts on an arylene sulfide bond to produce arylene thiolate. Available examples of the sulfidizing agent (b) include alkali metal sulfides, alkali metal hydrosulfides and hydrogen sulfide. Among them, the alkali metal hydrosulfides are especially preferable.

Typical examples of the alkali metal sulfide include lithium sulfide, sodium sulfide, potassium sulfide, rubidium sulfide, cesium sulfide and mixtures of two or more of these sulfides. Among them, lithium sulfide and/or sodium sulfide are preferable, and sodium sulfide is used especially preferably. Any of these alkali metal sulfides may be used as a hydrate or an aqueous mixture or may be used in the form of an anhydride. The aqueous mixture indicates an aqueous solution, a mixture of an aqueous solution and a solid content or a mixture of water and a solid content. Generally available, inexpensive alkali metal sulfides are hydrates and aqueous mixtures. It is accordingly preferable to use these types of alkali metal sulfides.

Typical examples of the alkali metal hydrosulfide include lithium hydrosulfide, sodium hydrosulfide, potassium hydrosulfide, lithium hydrosulfide, rubidium hydrosulfide, cesium hydrosulfide and mixtures of two or more of these hydrosulfides. Among them, lithium hydrosulfide and/or sodium hydrosulfide are preferable, and sodium hydrosulfide is used especially preferably.

The alkali metal sulfide used may be prepared in situ in a reaction system from an alkali metal hydrosulfide and an alkali metal hydroxide. The alkali metal sulfide used may also be prepared by causing an alkali metal hydrosulfide to be exposed in advance to an alkali metal hydroxide. Any of such alkali metal hydrosulfide and alkali metal hydroxide may be used as a hydrate or an aqueous mixture or may be used in the form of an anhydride. The hydrates and the aqueous mixtures are preferable, in terms of the easy accessibility and the cost.

Additionally, the alkali metal sulfide used may be prepared in situ in a reaction system from an alkali metal hydroxide such as lithium hydroxide or sodium hydroxide and hydrogen sulfide. The alkali metal sulfide used may also be prepared by causing an alkali metal hydroxide such as lithium hydroxide or sodium hydroxide to be exposed in advance to hydrogen sulfide. The hydrogen sulfide may be used without any problem in any form, i.e., a gas form, a liquid form or an aqueous solution form.

When the sulfidizing agent (b) has a partial loss caused by dehydration operation or the like prior to the start of reaction with the dihalogenated aromatic compound (c), the amount of the sulfidizing agent (b) according to the embodiment of the invention denotes a remaining amount calculated by subtracting this partial loss from the actual feeding amount of the sulfidizing agent (b).

An alkali metal hydroxide and/or an alkaline earth metal hydroxide may be used in combination with the sulfidizing agent (b). Concrete examples of the alkali metal hydroxide include sodium hydroxide, potassium hydroxide, lithium hydroxide, rubidium hydroxide, cesium hydroxide and mixtures of two or more of these hydroxides. Concrete examples of the alkaline earth metal hydroxide include calcium hydroxide, strontium hydroxide and barium hydroxide. Among them, sodium hydroxide is used preferably. When an alkali metal hydrosulfide is used as the sulfidizing agent, it is especially preferable to use an alkali metal hydroxide simultaneously. The amount of the alkali metal hydroxide used is, for example, in a range of not less than 0.95 mol, is preferably in a range of not less than 1.00 mol, and is more preferably in a range of not less than 1.005 mol, relative to 1 mol of the alkali metal hydrosulfide. The amount of the alkali metal hydroxide used is also, for example, in a range of not greater than 1.50 mol, is preferably in a range of not greater than 1.25 mol, is more preferably in a range of not greater than 1.200 mol, is furthermore preferably in a range of not greater than 1.100 mol, is especially preferably in a range of not greater than 1.05 mol and is most preferably in a range of not greater than 1.04 mol, relative to 1 mol of the alkali metal hydrosulfide.

According to the embodiment of the invention, when an alkali metal hydrosulfide is used as the sulfidizing agent (b), it is especially preferable to use an alkali metal hydroxide simultaneously. The amount of the alkali metal hydroxide used may be in a range of 0.95 mol to 1.04 mol, relative to 1 mol of the alkali metal hydrosulfide when the process 1b is employed and may be in a range of 0.95 to 1.50 mol when the process 2 is employed.

According to the embodiment of the invention, when hydrogen sulfide and/or an alkali metal sulfide are used as the sulfidizing agent (b), an alkali metal hydroxide may be used simultaneously. In this case, the amount of the alkali metal hydroxide used according to the embodiment of the invention does not denote the amount actually used but denotes, for the sake of convenience, an amount converted on the basis of the alkali metal hydrosulfide that is the

especially preferable sulfidizing agent (b) according to the embodiment of the invention.

More specifically, in principle, 1 mol of an alkali metal hydrosulfide is produced in situ in a reaction system from 1 mol of hydrogen sulfide and 1 mol of an alkali metal hydroxide. When hydrogen sulfide is used as the sulfidizing agent (b), the amount of an alkali metal hydroxide used is accordingly determined by subtracting 1 mol from the amount of the alkali metal hydroxide actually used relative to 1 mol of hydrogen sulfide. Accordingly, the converted amount of the alkali metal hydroxide relative to 1 mol of hydrogen sulfide according to the embodiment of the invention is preferably not less than 0.95 mol, is more preferably not less than 1.00 mol and is furthermore preferably not less than 1.005 mol. The converted amount of the alkali metal hydroxide is also preferably not greater than 1.50 mol, is more preferably not greater than 1.25 mol, is furthermore preferably not greater than 1.200 mol, is especially preferably not greater than 1.100 mol, is furthermore especially preferably not greater than 1.05 mol and is most preferably not greater than 1.04 mol. The actual range of the amount of the alkali metal hydroxide relative to 1 mol of hydrogen sulfide is preferably not less than 1.95 mol, is more preferably not less than 2.00 mol and is furthermore preferably not less than 2.005 mol. The actual range of the amount of the alkali metal hydroxide is also preferably not greater than 2.50 mol, is more preferably not greater than 2.25 mol, is furthermore preferably not greater than 2.200 mol, is especially preferably not greater than 2.100 mol, is furthermore especially preferably not greater than 2.05 mol and is most preferably not greater than 2.04 mol.

In principle, 1 mol of an alkali metal sulfide is produced from 1 mol of an alkali metal hydrosulfide and 1 mol of an alkali metal hydroxide. When an alkali metal sulfide is used as the sulfidizing agent (b), the amount of an alkali metal hydroxide used is accordingly determined by adding 1 mol to the amount of the alkali metal hydroxide actually used relative to 1 mol of the alkali metal sulfide. Accordingly, the converted amount of the alkali metal hydroxide according to the embodiment of the invention is preferably not less than 1.00 mol and is more preferably not less than 1.005 mol. The converted amount of the alkali metal hydroxide is also preferably not greater than 1.50 mol, is more preferably not greater than 1.25 mol, is furthermore preferably not greater than 1.200 mol, is especially preferably not greater than 1.100 mol, is furthermore especially preferably not greater than 1.05 mol and is most preferably not greater than 1.04 mol. The actual range of the amount of the alkali metal hydroxide relative to 1 mol of the alkali metal sulfide is preferably not less than 0.00 mol and is more preferably not less than 0.005 mol. The actual range of the amount of the alkali metal hydroxide is also preferably not greater than 0.50 mol, is more preferably not greater than 0.25 mol, is furthermore preferably not greater than 0.200 mol, is especially preferably not greater than 0.100 mol, is furthermore especially preferably not greater than 0.05 mol and is most preferably not greater than 0.04 mol.

(2-3-2) Dihalogenated Aromatic Compound

The dihalogenated aromatic compound (c) used in the embodiment of the invention is an aromatic compound having an arylene group that is a divalent aromatic ring group and two halogeno groups. One mol of the dihalogenated aromatic compound (c) is comprised of 1 mol of the arylene unit and 2 mol of the halogeno groups. Examples of a compound having a phenylene group that is a divalent benzene ring group as the arylene group and two halogeno groups include dihalogenated benzenes such as p-dichlorobenzene, o-dichlorobenzene, m-dichlorobenzene, p-dibromobenzene, o-dibromobenzene, m-dibromobenzene, 1-bromo-4-chlorobenzene and 1-bromo-3-chlorobenzene; and dihalogenated aromatic compounds (c) including substituent groups other than halogen such as 1-methoxy-2, 5-dichlorobenzene, 1-methyl-2, 5-dichlorobenzene, 1,4-dimethyl-2,5-dichlorobenzene, 1,3-dimethyl-2,5-dichlorobenzene and 3,5-dichlorobenzoic acid. Among them, preferable is the dihalogenated aromatic compound (c) including, as its main component, p-dihalogenated benzene such as p-dichlorobenzene. Especially preferable is the dihalogenated aromatic compound (c) including 80 to 100 mol% or more specifically 90 to 100 mol% of p-dichlorobenzene. Two or more different dihalogenated aromatic compounds (c) may be used in combination, in order to provide a cyclic PAS (a) copolymer.

(2-3-3) Nitrogen-Containing Organic Polar Solvent

According to the embodiment of the invention, the nitrogen-containing organic polar solvent (d) is used for reaction of the sulfidizing agent (b) and the dihalogenated aromatic compound (c) or for solid-liquid separation of a reaction product obtained by the reaction. Preferable concrete examples include N-alkylpyrrolidones such as N-methyl-2-pyrrolidone, N-ethyl-2-pyrrolidone, N-cyclohexyl-2-pyrrolidone; caprolactams such as N-methyl-ε-caprolactam and ε-caprolactam; aprotic organic solvents such as 1,3-dimethyl-2-imidazolidinone, N,N-dimethylacetamide, N,N-dimethylformamide and triamide hexamethylphosphate; and their mixtures, due to their high reaction stability. Among them, N-methyl-2-pyrrolidone and 1,3-dimethyl-2-imidazolidinone are used preferably.

According to the embodiment of the invention, the amount of the nitrogen-containing organic polar solvent used for the reaction of a reaction mixture including at least the sulfidizing agent (b), the dihalogenated aromatic compound (c) and the nitrogen-containing organic polar solvent (d) is preferably not less than 1.25 liters and not greater than 50 liters relative to 1 mol of the sulfur content in the reaction mixture. The lower limit is more preferably not less than 1.5 liters and is furthermore preferably not less than 2 liters. The upper limit is, on the other hand, more preferably not greater

than 20 liters and is furthermore preferably not greater than 15 liters. The amount of the solvent used herein is given on the basis of the volume of the solvent at ordinary temperatures and pressures.

Using the amount of the nitrogen-containing organic polar solvent (d) that is less than 1.25 liters significantly reduces the formation rate of the cyclic PAS produced by the reaction of the sulfidizing agent and the dihalogenated aromatic compound, while increasing the formation rate of the linear PAS produced as the byproduct accompanied with production of the cyclic PAS. This is accordingly likely to reduce the productivity of the cyclic PAS per unit raw material. The formation rate of the cyclic PAS (a) herein denotes a ratio of the amount of the cyclic PAS (a) actually produced in the process of manufacturing the cyclic PAS (a) described later in detail to the amount of the cyclic PAS (a) possibly produced on the assumption that all the sulfidizing agent (b) used for preparation of the reaction mixture is converted into the cyclic PAS (a) in the process of manufacturing the cyclic PAS (a). The formation rate of 100% means that all the sulfidizing agent (a) used is converted into the cyclic PAS (a). The formation rate of the linear PAS denotes a ratio of the amount of the linear PAS actually produced in the process of manufacturing the cyclic PAS (a) to the amount of the linear PAS possibly produced on the assumption that all the sulfidizing agent (b) used for preparation of the reaction mixture is converted into the linear PAS.

The higher formation rate of the cyclic PAS (a) is more preferable since this enables the raw material used (sulfidizing agent (b)) to be converted into the target product (cyclic PAS (a)) with the higher efficiency. Using an extremely large amount of the nitrogen-containing organic polar solvent (d) in the process of manufacturing the cyclic PAS (a) for the purpose of achieving a significantly high formation rate is, however, likely to decrease the production amount of the cyclic PAS (a) per unit volume of a reaction vessel and is also likely to increase the time period required for the reaction. Additionally, using an excessively large amount of the nitrogen-containing organic polar solvent (d) provides only a small amount of the cyclic PAS (a) per unit amount of the reactant, so that there is a difficulty in the operation of isolating and recovering the cyclic PAS (a). Using the amount of the nitrogen-containing organic polar solvent (d) in the above range is preferable, in terms of satisfying both the formation rate of the cyclic APS (a) and the productivity.

An extremely large amount of a solvent is often used in manufacture of a general cyclic compound. Using the amount of the solvent in the preferable range according to the embodiment of the invention is often unlikely to produce a cyclic compound with high efficiency. The embodiment of the invention, however, enables the cyclic PAS (a) to be produced with high efficiency under the condition that the amount of the solvent used is relatively small compared with that in manufacture of a general cyclic compound, i.e., even in the case where the amount of the solvent used is not greater than the preferable upper limit described above. This reason is not clear at the moment but may be attributable to the following. The method according to the embodiment of the invention performs the reaction at the temperature over the reflux temperature of the reaction mixture and thereby provides a significantly high reaction efficiency and a high consumption rate of the raw material. These are expected to favorably affect production of the cyclic compound. The amount of the nitrogen-containing organic polar solvent (d) used in the reaction mixture herein denotes an amount calculated by subtracting the amount of the nitrogen-containing organic polar solvent (d) removed from the reaction system from the amount of the nitrogen-containing organic polar solvent (d) introduced into the reaction system.

(2-3-4) Synthesis Reaction of Cyclic Polyarylene Sulfide (Process 1a)

The embodiment of the invention performs the process 1a that causes at least the sulfidizing agent (b) and the dihalogenated aromatic compound (c) to be exposed to each other in the nitrogen-containing organic polar solvent (d), so as to obtain the cyclic PAS (a). A method employed for the process 1a may be any method that uses the essential components described above as the raw materials. Preferable methods are, for example, a known method disclosed in JP 2009-30012A and a known method disclosed in JP 2009-227952A. In order to obtain the cyclic PAS (a) with high efficiency, these known methods cause a sulfidizing agent (b) and a dihalogenated aromatic compound (c) to be exposed to each other in an organic polar solvent, so as to produce a cyclic polyarylene sulfide. These known methods are characterized by using not less than 1.25 liters of the organic polar solvent relative to 1 mol of sulfur atom in the sulfidizing agent (b) and heating the reaction mixture at temperature over the reflux temperature at ordinary pressure.

More preferably, a method disclosed in WO 2013/061561 may be employed to prepare the cyclic PAS (a). This method produces polyarylene sulfide through a process that heats a reaction mixture having an arylene unit of not less than 0.80 mol and of 1.04 mol per 1 mol of the sulfur content in the reaction mixture and thereby causes 50% or more of the sulfidizing agent (b) in the reaction mixture to be consumed by the reaction and a subsequent process that adds the dihalogenated aromatic compound (c) such as to increase the arylene unit to be not less than 1.05 mol and not greater than 1.50 mol per 1 mol of the sulfur content in the reaction mixture and then additionally heats the reaction mixture to cause the reaction to further proceed, so as to obtain the cyclic polyarylene sulfide (a). This method provides the cyclic PAS (a) with a high yield, and moreover additionally performing the recovery operation of the cyclic PAS (a) described later provides the cyclic PAS (a) of the higher purity. This is preferable since it is highly likely to reduce the nitrogen content of the PAS obtained by heating according to a method described later.

When the method disclosed in WO 2013/061561 described above is employed to prepare the cyclic PAS (a),

it is further preferable to cause the reaction to be substantially completed in the latter process of adding the dihalogenated aromatic compound (c) performed after the former process described above. Completion of the reaction herein means that the reaction further proceeds to consume not less than 99% of the sulfidizing agent (b) and the dihalogenated aromatic compound (c) used as the raw materials after consumption of a major part of the sulfidizing agent (b) fed in the latter process or more specifically after consumption of preferably not less than 90% or more preferably not less than 95% of the sulfidizing agent (b). The time period required for completion of the reaction depends on the types of the raw materials and the reaction temperature and is thus not unequivocally determined. The lower limit of the reaction time is, for example, preferably not shorter than 0.1 hours and is more preferably not shorter than 0.25 hours. The upper limit of the reaction time is, on the other hand, for example, preferably not longer than 20 hours, is more preferably not longer than 10 hours and is furthermore preferably not longer than 5 hours. Substantial completion of the reaction provides the cyclic PAS (a) with a high yield, and moreover additionally performing the recovery operation of the cyclic PAS (a) described later provides the cyclic PAS (a) of the higher purity. This is preferable since it is highly likely to reduce the nitrogen content of the PAS obtained by heating this cyclic PAS (a) according to a method described later.

(2-3-5) Amounts of Alkali Metal Hydroxide and/or Alkaline Earth Metal Hydroxide Used (Process 1b)

According to the embodiment of the invention, 0.95 to 1.04 mol of the alkali metal hydroxide (e) is added relative to 1 mol of the sulfidizing agent (b) when the process 1b is performed out of the combinations described above.

The amount of the alkali metal hydroxide is, for example, 0.950 mol, is more preferably not less than 1.000 mol, is furthermore preferably not less than 1.050 mol and is most preferably not less than 1.100 mol. The amount of the alkali metal hydroxide is also, for example, not greater than 1.040 mol, is more preferably not greater than 1.035 mol, is furthermore preferably not greater than 1.035 mol and is most preferably not greater than 1.030 mol.

According to the embodiment of the invention, a reaction product including at least the cyclic PAS (a) and the linear PAS is obtained by the synthesis reaction described above. The nitrogen-containing organic polar solvent (d) used for the synthesis reaction is generally also included in the reaction product.

The above preferable range is likely to further reduce the nitrogen content in the resulting PAS. This reason is not clear but may be attributed to that a side reaction caused by the alkali metal hydroxide is suppressed in the synthesis reaction to produce the cyclic PAS (a) used as the raw material of the PAS. This is expected to reduce nitrogen-containing byproducts and accordingly provide the cyclic PAS (a) of the higher purity.

Decreasing the amount of the alkali metal hydroxide added is likely to reduce the reaction efficiency. This reason is not clear but may be attributed to that the insufficient basicity leads to reduction in the nucleophilicity of anion in the reaction system. The amount of the alkali metal hydroxide added in the above preferable range satisfies both the reaction efficiency and the physical properties of the PAS.

(2-3-6) Recovery Method 1 of Cyclic Polyarylene Sulfide

The embodiment of the invention performs the process 1a or the process 1b described above to obtain a reaction product including at least the cyclic PAS (a) and the linear PAS. The nitrogen-containing organic polar solvent (d) used in the process 1a or in the process 1b is generally also included in the reaction product.

When the process 1b described above is employed, the isolation method of the cyclic PAS (a) is not specifically limited, but any known method may be employed for isolation. For example, recovery methods described below may be provided as concrete examples. Available methods may include, for example: (i) a method disclosed in Patent Literature 3 mentioned above (JP H05-163349A) that first removes part or most part of the organic polar solvent from the reaction mixture obtained by the reaction, so as to recover a solid mixture primarily consisting of the cyclic PAS (a) and the linear PAS, subsequently causes the solid mixture to be exposed to a solvent in which the cyclic PAS (a) is dissolved, so as to prepare a solution of the nitrogen-containing organic polar solvent (d) including the cyclic PAS (a), and then removes the solvent used for dissolution from the solution, so as to obtain the cyclic PAS (a); (ii) a method disclosed in JP 2007-231255A that causes a PAS mixture including at least the linear PAS and the cyclic PAS (a) to be exposed to a solvent in which the cyclic PAS (a) is dissolved, so as to prepare a solution of the nitrogen-containing organic polar solvent (d) including the cyclic PAS (a), and subsequently obtains the cyclic PAS (a) from the solution; (iii) a method disclosed in JP 2009-149863A that recovers the cyclic PAS (a) from a reaction mixture which includes at least the linear PAS and the cyclic PAS (a) and is obtained by exposure and reaction of a sulfidizing agent to and with a dihalogenated aromatic compound in an organic polar solvent and that is characterized by removing the organic polar solvent from a filtrate obtained by solid-liquid separation of the reaction mixture in a temperature range of not higher than the boiling point of the organic polar solvent at ordinary pressure; and (iv) a method disclosed in JP 2010-037550A that recovers the cyclic PAS (a) by solid-liquid separation after distillation of part of an organic polar solvent from a mixture including at least the PAS, the cyclic PAS (a) and the organic polar solvent.

(2-3-7) Recovery Method 2 of Cyclic Polyarylene Sulfide (Process 2)

According to the embodiment of the invention, when the process 1b described above is not employed, the process 2 described below is essential to obtain the PAS according to the embodiment of the invention. The process 2 may be performed even when the process 1b is employed.

The embodiment of the invention adds an alkaline solution (e) or an acid solution (f) different from the nitrogen-containing organic polar solvent (d) to the solution of the nitrogen-containing organic polar solvent (d) including at least the cyclic PAS (a) and thereby recovers the cyclic PAS (a) as the solid content in the process 2.

In the solution of the nitrogen-containing organic polar solvent (d) including the cyclic PAS (a), it is preferable that no component is present other than the cyclic PAS (a) and the nitrogen-containing organic polar solvent (d). Other components may, however, be included in the solution in such a range that does not adversely affect the characteristics of the embodiment of the invention.

There is no specific limitation in the method of obtaining the solution of the nitrogen-containing organic polar solvent (d) including the cyclic PAS (a) described above. Available methods may include, for example, (i) a method of obtaining a solution of the nitrogen-containing organic polar solvent (d) including at least the cyclic PAS (a) by solid-liquid separation of a reaction product that is obtained through the synthesis reaction of the cyclic PAS (a) described above and includes at least the cyclic PAS (a) and the linear PAS; and (ii) a method of obtaining a solution of the nitrogen-containing organic polar solvent (d) including at least the cyclic PAS (a) by causing a solid content including at least the cyclic PAS (a) to be exposed, on heating as required, to a solvent to which the cyclic PAS (a) has low solubility, which is mixable with the nitrogen-containing organic polar solvent (d) and preferably to which byproduct salts have solubility, recovering a PAS content as a solid mixture of the cyclic PAS (a) and the linear PAS, extracting the cyclic PAS (a) using a solvent to which the cyclic PAS (a) has high solubility and to which the linear PAS has low solubility and dispersing the extracted cyclic PAS (a) in the nitrogen-containing organic polar solvent (d). Out of these methods, in terms of obtaining the cyclic PAS (a) of the high purity with high efficiency, preferable is the method of obtaining the solution of the nitrogen-containing organic polar solvent (d) including at least the cyclic PAS (a) by solid-liquid separation of the reaction product including at least the cyclic PAS (a) and the linear PAS.

With regard to the above solid-liquid separation, the temperature at which solid-liquid separation of the reaction product is performed is desirably not higher than the reflux temperature of the nitrogen-containing organic polar solvent (d) at ordinary pressure. The concrete temperature depends on the type of the organic polar solvent. The upper limit temperature is, for example, preferably not higher than 200°C, is more preferably not higher than 120°C and is furthermore preferably not higher than 80°C. The lower limit temperature is, for example, preferably not lower than 0°C, is more preferably not lower than 20°C and is furthermore preferably 30°C. The reflux temperature denotes temperature at which the liquid component of the reaction product repeats boiling and condensation. In the above temperature range, the cyclic PAS (a) is highly soluble in the nitrogen-containing organic polar solvent (d), while any component other than the cyclic PAS (a) included in the reaction product or more specifically the linear PAS included in the reaction product as the essential component is unlikely to be soluble in the nitrogen-containing organic polar solvent (d). Solid-liquid separation in such a temperature range is thus effective to obtain the cyclic PAS (a) of the high quality with high efficiency as a filtrate component. This method provides the cyclic PAS (a) of the high purity and accordingly further reduces the nitrogen content in the resulting PAS obtained by heating.

The method employed for solid-liquid separation is not specifically limited, but employable methods include, for example, filtration using a filter such as pressure filtration and suction filtration, separation by taking advantage of the difference in specific gravity between the solid content and the solution such as centrifugal separation and precipitation separation, and combinations thereof. Pressure filtration or suction filtration using the filter is preferably employable as the easier method of solid-liquid separation. The filter used in the filtration operation is preferably stable under conditions of the solid-liquid separation. For example, generally used filtering media such as wire mesh filter, sintered plate, filter cloth and filter paper may be used preferably.

The pore size of this filter may be adjustable in a wide range, depending on the viscosity, the pressure and the temperature of the slurry subjected to the operation of solid-liquid separation and the particle size of the solid content in the reaction product. More specifically, it is effective to select the pore size of the filter such as the mesh size or the pore diameter according to the particle size of the linear PAS that is recovered as the solid content from the reaction product by this operation of solid-liquid separation, i.e., the particle size of the solid content that is present in the reaction product subjected to solid-liquid separation. The mean particle size (median size) of the solid content in the reaction product subjected to solid-liquid separation may be varied in a wide range, depending on the composition, the temperature and the concentration of the reaction product. To the best knowledge of the performer of the present invention, the mean particle size is likely to be 1 to 200 $\mu$m. The preferable mean pore size of the filter may thus be 0.01 to 100 $\mu$m. The mean pore size is preferably in a range of not less than 0.25 $\mu$m and is more preferably in a range of not less than 0.5 $\mu$m. The mean pore size is also preferably in a range of not greater than 20 $\mu$m and is more preferably in a range of not greater than 15 $\mu$m. Using the filtering medium having the mean pore size in the above range is likely to decrease the

linear PAS that passes through the filtering medium and is thus likely to obtain the cyclic PAS (a) of the high purity.

When a membrane filter or a glass filter is used as the filtering medium, the upper limit of the pore diameter is, for example, preferably not greater than 74 μm, is more preferably not greater than 70μm, is furthermore preferably not greater than 50μm and is especially preferably not greater than 20μm. Using the filtering medium having such a pore diameter is likely to decrease the linear polyarylene sulfide that passes through the filtering medium. The lower limit of the pore diameter is, for example, not less than 0.01 μm, is preferably not less than 0.1 μm and is especially preferably not less than 0.45 μm. Using the filtering medium having such a pore diameter suppresses clogging and ensures the good operability in solid-liquid separation.

When a metal mesh is used for the filtering medium, the material of the metal mesh depends on the conditions of solid-liquid separation such as temperature and the component composition of the reaction mixture such as the organic polar solvent and is thus not unequivocally determined. The material is not specifically limited as long as the material is stable under the conditions of solid-liquid separation described above. The material of the metal mesh preferably used according to the embodiment of the invention may be, for example, stainless steel such as SUS 304, SUS 316 and SUS 316L and special steel such as Hastelloy. Among them, in terms of the general versatility, the above stainless steel generally used is preferable, and especially SUS 316 and SUS 316L are more preferable.

In general, the size of the aperture of the metal mesh is often expressed by "mesh". The lower limit is, for example, preferably not less than 350 mesh, is more preferably not less than 400 mesh and is furthermore preferably not less than 500 mesh. The upper limit is, for example, preferably not greater than 2000 mesh, is more preferably not greater than 1000 mesh and is furthermore preferably not greater than 800 mesh. The numerical value of "mesh" slightly differs among makers. The above preferable range of the mesh size is included in the range of the preferable size of the aperture described above.

When filter cloth is used for the filtering medium, the material of the filter cloth similarly depends on the conditions of solid-liquid separation such as temperature and the component composition of the reaction mixture such as the organic polar solvent and is thus not unequivocally determined. The material is not specifically limited but is preferably a material that is stable under the conditions of solid-liquid separation. The material of the filter cloth preferably used according to the embodiment of the invention may be, for example, polyphenylene sulfide and polytetrafluoroethylene having the higher heat resistance and the higher chemical resistance, in addition to polypropylene, polyethylene terephthalate and nylon that are generally used. Among them, in terms of the cost of the filtering medium, the generally used polypropylene, polyethylene terephthalate and nylon are preferable, and polypropylene is more preferable. The solid-liquid separability generally does not depend on the material of the filter cloth, so that the material may be selected according to the temperature of solid-liquid separation and the type of the organic polar solvent used. For example, when there is a difficulty in application of polypropylene in terms of the heat resistance or the chemical resistance, polyphenylene sulfide or polytetrafluoroethylene having the higher heat resistance and the higher chemical resistance may be selected preferably.

It is generally difficult to express the pore diameter or the aperture of the filter cloth by a numerical value, due to the complexity of its shape and size. The pore diameter or the aperture of the filter cloth may thus be expressed by the "air permeability (cubic centimeter/ (square centimeter · second))". The size of the pore of the filter cloth used according to the embodiment of the invention is accordingly also expressed by the air permeability. The upper limit of the air permeability is, for example, preferably not greater than 50 cubic centimeter/ (square centimeter · second), is more preferably not greater than 30 cubic centimeter/ (square centimeter · second), is furthermore preferably not greater than 20 cubic centimeter/ (square centimeter · second) and is especially preferably not greater than 10 cubic centimeter/ (square centimeter · second). The lower limit of the air permeability is, for example, not less than 1 cubic centimeter/ (square centimeter · second), is more preferably not less than 2 cubic centimeter/ (square centimeter · second) and is furthermore preferably not less than 3 cubic centimeter/ (square centimeter · second). The air permeability according to the embodiment of the invention is given as a value measured by a method specified in JIS L 1096.

The atmosphere in which solid-liquid separation is performed is not specifically limited. In the case of oxidative degradation of the cyclic PAS (a), the organic polar solvent or the linear PAS under some conditions of the exposure such as the exposure time and the temperature, it is preferable to perform solid-liquid separation in a non-oxidizing atmosphere. The non-oxidizing atmosphere herein indicates an atmosphere having the oxygen concentration of not higher than 5% by volume in the gas phase, preferably an atmosphere having the oxygen concentration of not higher than 2% by volume and more preferably an atmosphere that contains substantially no oxygen, i.e., an inert gas atmosphere such as nitrogen, helium or argon. Among them, it is preferable to perform solid-liquid separation in a nitrogen atmosphere, in terms of the economic efficiency and the ease of handling.

The type of a filter used for solid-liquid separation may be, for example, a sieve, a vibrating screen, a centrifugal separator, a precipitation separator, a pressure filter or a suction filter, but these are not restrictive. In terms of performing solid-liquid separation in the non-oxidizing atmosphere that is a preferable atmosphere for solid-liquid separation as described above, it is preferable to select a filter having such a mechanism that can readily maintain the non-oxidizing atmosphere during the operation of solid-liquid separation. Available examples include a filter that enables filtration

operation to be performed after the inside of the filter is substituted with an inert gas and is then sealed and a filter equipped with a mechanism that enables filtration operation to be performed with flowing an inert gas. Among the above examples of the filters, the centrifugal separator, the precipitation separator and the pressure filter are preferable filters since the above mechanism can be readily added to these filters. Especially the pressure filter is more preferable, in terms of the simplicity of the mechanism and the high economic efficiency.

The pressure in the process of solid-liquid separation is not specifically limited. In order to accomplish solid-liquid separation in a shorter time period, solid-liquid separation may be performed under pressure using the pressure filter described above. More specifically, the pressure range expressed by the gauge pressure is, for example, preferably not higher than 2.0 MPa, is more preferably not higher than 1.0 MPa, is furthermore preferably not higher than 0.8 MPa and is especially preferably not higher than 0.5 MPa. In general, there is a need to increase the pressure resistance of the equipment used for solid-liquid separation, with an increase in pressure. The equipment needs to have the high sealing property in respective portions constituting the equipment. This naturally results in increasing the equipment cost. A generally available solid-liquid separator is, however, usable in the above preferable pressure range.

An operation of distilling away part of the nitrogen-containing organic polar solvent (d) included in the reaction product and thereby decreasing the amount of the nitrogen-containing organic polar solvent (d) in the reaction product may be performed additionally, prior to the operation of solid-liquid separation of the reaction product. This decreases the amount of the reaction product subjected to the operation of solid-liquid separation and is thus likely to shorten the time period required for the operation of solid-liquid separation.

Any method may be employed without any problem to distil away the nitrogen-containing organic polar solvent (d), as long as the method separates the nitrogen-containing organic polar solvent (d) from the reaction product and decreases the amount of the nitrogen-containing organic polar solvent (d) included in the reaction product. Preferable methods include a method of distilling the nitrogen-containing organic polar solvent (d) under reduced pressure or under pressure and a method of removing the solvent by flash transport. Especially preferable is the method of distilling the nitrogen-containing organic polar solvent (d) under reduced pressure or under pressure. An inert gas such as nitrogen, helium or argon may be used as the carrier gas in the process of distilling the nitrogen-containing organic polar solvent (d) under reduced pressure or under pressure.

The temperature at which the nitrogen-containing organic polar solvent (d) is distilled away is varied depending on the type of the nitrogen-containing organic polar solvent (d) and the composition of the reaction product and is thus not unequivocally determined. The temperature is, for example, preferably in a range of not lower than 180°C and is more preferably in a range of not lower than 200°C. The temperature is also, for example, preferably in a range of not higher than 300°C, is more preferably not higher than 280°C and is furthermore preferably not higher than 250°C.

The solid-liquid separation performed herein can separate a major part of the cyclic PAS (a) included in the reaction product as the filtrate component. The solid-liquid separation can preferably recover not less than 80% of the cyclic PAS (a), more preferably recover not less than 90% of the cyclic PAS (a) and furthermore preferably recover not less than 95% of the cyclic PAS (a) as the filtrate component. When part of the cyclic PAS (a) remains in the linear PAS separated as the solid content by solid-liquid separation, the solid content may be washed with the fresh nitrogen-containing organic polar solvent (d). This may reduce the amount of the cyclic PAS (a) remaining in the solid content. The solvent used herein is preferably a solvent in which the cyclic PAS (a) is dissolved and is more preferably a solvent that is identical with the nitrogen-containing organic polar solvent (d) used in the process 1a, the process 1b and the process 2 described above.

This recovery method adds an alkaline solution (e) or an acid solution (f) different from the nitrogen-containing organic polar solvent (d) (in the description below, the alkaline solution (e) or the acid solution (f) may be referred to as the added solution (g)) to the solution of the nitrogen-containing organic polar solvent (d) including at least the cyclic PAS (a) as described above and thereby causes the cyclic PAS (a) dissolved in the nitrogen-containing organic polar solvent (d) to be deposited and recovered as the solid content.

The higher content rate of the cyclic PAS (a) in this mixture (i.e., the higher fraction of the weight of the cyclic PAS (a) to the sum of the weight of the cyclic PAS (a) and the weight of the nitrogen-containing organic polar solvent (d)) is more preferable. In general, the higher content rate provides the higher yield of the cyclic PAS (a) obtained after the recovery operation and enables the cyclic PAS (a) to be recovered with high efficiency. From this point of view, the content rate of (a) in the mixture is, for example, preferably in a range of not lower than 1% by weight and is more preferably in a range of not lower than 4% by weight. The upper limit is, for example, not higher than 20% by weight and is preferably not higher than 18% by weight. The content rate in this range is likely to satisfy both the efficiency of recovery and the purity of the resulting PAS (a).

The weight of the solvent (c) to be added to the mixture that includes the solution of the containing organic polar solvent (e) including the cyclic PAS (a) may be, for example, not higher than 50% by weight of the organic solvent (b), may be set to be not higher than 40% by weight as the more preferable condition and may be set to be not higher than 35% by weight as the furthermore preferable condition. There is no specific limitation on the lower limit of the weight of the solvent (c) to be added. In order to recover the cyclic PAS (a) as the solid content with the higher efficiency, the

weight is, for example, preferably not lower than 10% by weight and is more preferably not lower than 15% by weight. Decreasing the amount of the solvent (c) added provides the recovery operation in the smaller scale and is thus expected to improve the operability. According to the embodiment of the invention, 50% by weight or more of the cyclic PAS (a) included in the mixture may be recovered as the solid content. The preferable range of the amount of the solvent (c) used may be not less than 80% by weight of the cyclic PAS (a). This is likely to ensure recovery of the cyclic PAS (a) as the solid content. The range is more preferably not less than 90% by weight and is furthermore preferably not less than 95%. There is no specific limitation in the method of adding the added solution (g) to the mixture. It is, however, preferable to avoid such an addition method that causes a coarse solid content to be generated by addition of the added solution (g). A preferable method adds the added solution (g) dropwise with stirring the mixture.

The temperature at which the added solution (g) is added is not specifically limited. The lower temperature is, however, more likely to generate the more coarse solid content by addition of the added solution (g). In terms of maintaining the homogeneity of the mixture with avoiding such a disadvantage in the operation, the temperature is preferably not lower than 50°C, is more preferably not lower than 60°C and is furthermore preferably not lower than 75°C. The upper limit temperature may be, on the other hand, preferably not higher than the reflux temperature of the used nitrogen-containing organic polar solvent (d) at ordinary pressure. The upper limit temperature is preferably not higher than 100°C, is more preferably not higher than 90°C and is furthermore preferably not higher than 85°C. An operation such as stirring or shaking may be performed in the process of preparing this mixture. This operation is desirable in terms of maintaining the more homogeneous state of the mixture.

The alkaline solution (e) used according to the embodiment of the invention may be preferably an aqueous solution of an alkali metal hydroxide and/or an alkaline earth metal hydroxide. For example, sodium hydroxide, potassium hydroxide, lithium hydroxide, rubidium hydroxide, cesium hydroxide and mixtures of two or more of these hydroxides are given as preferable concrete examples of the alkali metal hydroxide. For example, calcium hydroxide, strontium hydroxide and barium hydroxide are given as concrete examples of the alkaline earth metal hydroxide. Especially sodium hydroxide is used preferably.

The concentration of the alkaline solution (e) expressed by normality as a matter of convenience is, for example, preferably not lower than 0.025 normal, is more preferably not lower than 0.1 normal and is furthermore preferably not lower than 0.25 normal. The concentration of the alkaline solution (e) is also, for example, preferably not higher than 5 normal, is more preferably not higher than 3 normal and is furthermore preferably not higher than 1.5 normal. This preferable concentration range is likely to increase the purity of the cyclic PAS (a) recovered by addition of the alkaline solution and thus reproducibly provides the effect of reducing the nitrogen content in the resulting PAS obtained by heating.

The acid solution (f) used according to the embodiment of the invention may be, for example, a solution including an inorganic acid or a carboxylic acid. Hydrochloric acid, sulfuric acid, silicic acid, nitric acid and phosphoric acid are given as concrete examples of the inorganic acid. Formic acid, acetic acid, benzoic acid and propionic acid are given as concrete examples of the carboxylic acid. Among them, acetic acid and hydrochloric acid are used more preferably. An acid that possibly deteriorates the PAS, for example, nitric acid, tends to be unfavorable.

The concentration of the acid solution (f) expressed by normality as a matter of convenience is, for example, preferably not lower than 0.025 normal, is more preferably not lower than 0.1 normal and is furthermore preferably not lower than 0.25 normal. The concentration of the acid solution (f) is also, for example, preferably not higher than 5 normal, is more preferably not higher than 3 normal and is furthermore preferably not higher than 1.5 normal. This preferable concentration range is likely to increase the purity of the cyclic PAS (a) recovered by addition of the acid solution and thus reproducibly provides the effect of reducing the nitrogen content in the resulting PAS obtained by heating.

A solvent of the alkaline solution (e) or the acid solution (f) used according to the embodiment of the invention is preferably a solvent having such a characteristic that not less than 50% by weight, preferably not less than 70% by weight, more preferably not less than 90% by weight or furthermore preferably not less than 95% by weight of the cyclic PAS (a) is recovered as the solid content by addition to the solution of the nitrogen-containing organic polar solvent (d) including at least the cyclic PAS (a). Accordingly it is preferable that the cyclic PAS (a) has low solubility to this solvent than the nitrogen-containing organic solvent (d). It is also desirable that the solvent is mixable with the nitrogen-containing organic polar solvent. The solvent having such characteristics is generally a solvent having the high polarity. The preferable solvent differs according to the type of the nitrogen-containing organic polar solvent (d) used and may thus not be specified. Available examples of the solvent include water, alcohols such as methanol, ethanol, propanol, isopropyl alcohol, butanol and hexanol, ketones such as acetone and methyl ethyl ketone, and acetate esters such as ethyl acetate and butyl acetate. Among them, water and alcohols are used preferably since these protic solvents have high polarity and the cyclic PAS (a) has low solubility to these protic solvents. In terms of the availability, the economic efficiency and the ease of handling, water, methanol and ethanol are preferable among these protic solvents, and water is especially preferable.

The PAS obtained through the operation of recovery of the cyclic PAS (a) by addition of the alkaline solution (e) or the acid solution (f) is likely to have the decreased nitrogen content. This reason is not clear at the moment but may be attributed to a change in solubility of the impurity having the nitrogen-containing structure and resulting efficient

removal of the impurity.

In a mixture of the cyclic PAS (a), the nitrogen-containing organic polar solvent (d) and the alkaline solution (e) or the acid solution (f) obtained by the series of operations described above (hereinafter this mixture may be referred to as mixture (h)), 50% by weight or more of the cyclic PAS (a) is present as the solid content. Accordingly the cyclic PAS (a) may be recovered by using a known solid-liquid separation method. The solid-liquid separation method may be, for example, separation by filtration, centrifugal separation or decantation. In order to increase the recovery rate of the cyclic PAS (a), it is preferable to perform solid-liquid separation after temperature control of the mixture (h) to be lower than 50°C, more preferably to be not higher than 40°C and furthermore preferably to be not higher than 30°C. The recovery of the cyclic PA (a) after such temperature control to the preferable temperature provides the effect of enhancing the recovery rate of the cyclic PAS (a) and also preferably enables the cyclic PAS (a) to be recovered by the simpler equipment. There is no specific limitation on the lower limit temperature of the mixture (h), but it is preferable to avoid such a condition that a temperature decrease provides the excessively high viscosity of the mixture (h) or solidifies the mixture (h). In general, most preferable is the approximately ambient temperature.

Such solid-liquid separation causes 50% by weight or more of the cyclic PAS (a) present in the mixture (h) to be isolated and recovered as the solid content. When the cyclic PAS (a) in the solid form separated in this manner includes a liquid component (mother liquor) of the mixture (h), the amount of the mother liquor may be reduced by washing the cyclic PAS (a) in the solid form with some of various solvents. As the various solvents used for linear of the cyclic PAS in the solid liquid form, a solvent to which the cyclic PAS (a) has low solubility is desirably used. For example, the solvent of the above added solution (g) may be used preferably. Additional washing with such a solvent reduces the amount of the mother liquor included in the cyclic PAS (a) in the solid form and also has the effect of reducing the impurity that is soluble in the solvent included in the cyclic PAS (a). Methods employable for such washing may include a method that adds a solvent onto a separation filter on which a solid content cake is accumulated and performs solid-liquid separation and a method that adds a solvent to a solid content cake with stirring to form a slurry and subsequently performs solid-liquid separation again. The cyclic PAS (a) in the wet state including a liquid component, for example, including the mother liquor described above or including the solvent component used for the washing operation may be subjected to, for example, a conventional drying process for removal of the liquid component, so that the cyclic PAS (a) may be obtained in the dry state.

The atmosphere in which the recovery operation of the cyclic PAS (a) is performed is preferably a non-oxidizing atmosphere. This is likely to suppress undesired side reactions such as crosslinking reaction, degradation reaction and oxidizing reaction of the cyclic PAS (a) during recovery of the cyclic PAS (a) and additionally suppress undesired side reactions such as oxidative degradation of the nitrogen-containing organic polar solvent (d) and the added solution (g) used for the recovery operation. The non-oxidizing atmosphere herein indicates an atmosphere having the oxygen concentration of not higher than 5% by volume in the gas phase to which various components involved in the recovery operation are exposed, preferably an atmosphere having the oxygen concentration of not higher than 2% by volume and more preferably an atmosphere that contains substantially no oxygen, i.e., an inert gas atmosphere such as nitrogen, helium or argon. Among them, nitrogen atmosphere is especially preferable as the non-oxidizing atmosphere, in terms of the economic efficiency and the ease of handling.

A PAS prepolymer including at least the cyclic PAS (a) is obtained by performing the above series of operations. The upper limit of the molecular weight of the PAS prepolymer recovered and obtained is preferably not greater than 10000, is more preferably not greater than 5000 and is furthermore preferably not greater than 3000 as the weight-average molecular weight. The lower limit is, on the other hand, preferably not less than 300, is more preferably not less than 400 and is furthermore preferably not less than 500 as the weight-average molecular weight.

(2-4) Conversion of Polyarylene Sulfide Prepolymer to High Polymer

The PAS according to the embodiment of the invention described above is manufactured by heating the above PAS prepolymer and thereby converting the PAS prepolymer into a high polymer. The temperature of heating is preferably the melting temperature of the above PAS prepolymer, but the temperature condition is not specifically limited. When the heating temperature is lower than the melting temperature of the PAS prepolymer, it is likely to require a long time period to obtain PAS. The melting temperature of the PAS prepolymer is varied depending on the composition and the molecular weight of the PAS prepolymer as well as the environment during heating and is thus not unequivocally determined. For example, the melting temperature may be specified by analysis of the PAS prepolymer with a differential scanning calorimeter. The excessively high temperature is, however, likely to cause undesired side reactions, such as crosslinking reaction and degradation reaction between the PAS prepolymer, between the PAS produced by heating and between the PAS and the PAS prepolymer and is likely to deteriorate the properties of the obtained PAS. It is accordingly desirable to avoid the temperature that significantly causes such undesired side reactions. The heating temperature is, for example, not lower than 180°C, is preferably not lower than 200°C and is more preferably not lower than 250°C. The heating temperature is also, for example, not higher than 400°C, is preferably not higher than 380°C

and is more preferably not higher than 360°C.

The time period required for the above heating is varied depending on various properties, for example, the content rate, the number of repeating units and the molecular weight of the cyclic PAS (a) in the PAS prepolymer used and conditions such as the heating temperature and is thus not unequivocally determined. It is, however, preferable to set the time period required for heating to a time duration that minimizes the undesired side reactions described above. The heating time is, for example, not shorter than 0.05 hour, is preferably not shorter than 0.1 hour and is more preferably not shorter than 0.1 hour. The heating time is also, for example, not longer than 100 hours, is preferably not longer than 20 hours and is more preferably not longer than 10 hours. The heating time of shorter than 0.05 hour is likely to cause insufficient conversion of the PAS prepolymer into PAS. The heating time of longer than 100 hours is likely to increase the likelihood that adverse effects of the undesired side reactions on the properties of the resulting PAS become obvious, and is also likely to be economically disadvantageous.

Conversion of the PAS prepolymer into a high polymer by heating as described above may be performed by a method using a general polymerization reactor and may also be performed using any device equipped with a heating mechanism without limitation, for example, may be performed in a mold used for producing a molded product or may be performed by using an extruder or a melt kneader. A known method such as a batch method or a continuous method may be employed for such conversion.

The atmosphere in the conversion of the PAS prepolymer into a high polymer by heating is preferably a non-oxidizing atmosphere, and it is also preferable to perform the conversion under reduced pressure. When the conversion is performed under reduced pressure, it is preferable to control the atmosphere in the reaction system first to a non-oxidizing atmosphere and then to the reduced pressure. This is likely to suppress undesired side reactions such as crosslinking reaction and degradation reaction between the PAS prepolymer, between the PAS produced by heating and between the PAS and the PAS prepolymer. The non-oxidizing atmosphere herein indicates an atmosphere having the oxygen concentration of not higher than 5% by volume in the gas phase to which the PAS prepolymer is exposed, preferably an atmosphere having the oxygen concentration of not higher than 2% by volume and more preferably an atmosphere that contains substantially no oxygen, i.e., an inert gas atmosphere such as nitrogen, helium or argon. Among them, nitrogen atmosphere is especially preferable as the non-oxidizing atmosphere, in terms of the economic efficiency and the ease of handling. The reduced pressure indicates that the pressure in the reaction system is lower than the atmospheric pressure. The upper limit is preferably not higher than 50 kPa, is more preferably not higher than 20 kPa and is furthermore preferably not higher than 10 kPa. The lower limit is, for example, not lower than 0.1 kPa and is more preferably not lower than 0.2 kPa. The reduced pressure that exceeds the preferable upper limit is likely to cause undesired side reactions such as crosslinking reaction. The reduced pressure that is below the preferable lower limit is, on the other hand, likely to volatilize the cyclic PAS (a) of the low molecular weight included in the PAS prepolymer, depending on the reaction temperature.

(3) Properties of PAS according to Embodiment of Invention

The PAS according to the embodiment of the invention has a high heat resistance, a high thermal oxidation resistance, a high chemical resistance, a high flame retardancy, good electric properties and good mechanical properties, and more specifically has the narrower distribution of molecular weight, the less amount of gas generation on heating and the better thermal oxidation resistance and the better melt stability than those of the conventional PAS. The PAS according to the embodiment of the invention accordingly has extremely good molding processability, extremely good mechanical properties and extremely good electric properties. The PAS is not only applicable to injection molding, injection compression molding and blow molding but is moldable and usable for extrusion molded products such as sheets, films, fibers and pipes by extrusion molding.

A known melt film-forming method may be employed as the method of manufacturing a PAS film using the PAS according to the embodiment of the invention. Available methods may include, for example, a method that melts the PAS in a single screw extruder or a twin screw extruder, subsequently extrudes the melted PAS from a film die and cools down the extruded PAS on a cooling drum to form a film and a biaxial stretching method that stretches the film formed by the above method lengthwise and breadthwise with a roller-type vertical stretching machine and a horizontal stretching machine called tenter. The manufacturing method is, however, not specifically limited to these methods.

A known melt spinning method may be applied as the method of manufacturing PAS fibers using the PAS according to the embodiment of the invention. For example, employable may be a method that feeds and kneads PAS chips as the raw material in a single screw extruder or a twin screw extruder, extrudes the kneaded PAS from a spinneret through a polymer flow exchanger provided on a leading end of the extruder and a filtration layer, and cools down, stretches and applies heat to the extruded PAS. The manufacturing method is, however, not specifically limited to this method.

The PAS according to the embodiment of the invention may be used alone or may be mixed with, for example, an inorganic filler such as glass fiber, carbon fiber, titanium oxide or calcium carbonate, an antioxidant, a heat stabilizer,

a UV absorber and a coloring agent as required. The PAS may also be mixed with a resin, for example, polyamide, polysulfone, polyphenylene ether, polycarbonate, polyether sulfone, polyester such as polyethylene terephthalate or polybutylene terephthalate, polyethylene, polypropylene, polytetrafluoroethylene, olefin copolymer having a functional group such as epoxy group, carboxyl group, carboxylate group or acid anhydride group, polyolefin elastomer, polyether ester elastomer, polyether amide elastomer, polyamide imide, polyacetal or polyimide.

(4) Applications of PAS according to Embodiment of Invention

The PAS according to the embodiment of the invention characteristically has good molding processability, good mechanical properties and good electric properties. Its application is thus not specifically limited but may include: electric and electronic components such as sensors, LED lamps, connectors, sockets, resistors, relay cases, switches, coil bobbins, capacitors, variable capacitor cases, optical pickups, oscillators, various terminal boards, transformers, plugs, printed circuit boards, tuners, speakers, microphones, headphones, small motors, magnetic head bases, power modules, semiconductors, liquid crystals, FDD carriages, FDD chasses, motor brush holders, parabola antennas, and computer-related components; domestic and office electric appliance components such as VTR components, TV set components, irons, irons, hair dryers, rice cooker components, microwave oven components, acoustic components, audio visual equipment components for audio/laserdiscs (registered trademark), compact discs and digital video discs, lighting components, refrigerator components, air conditioner components, typewriter components and word processor components; office computer-related components, telephone-related components, facsimile-related components, copy machine-related components, cleaning jigs, motor components, and machine components for lighters and typewriters; optical equipment and precision machine components, such as microscopes, binoculars, cameras and watches; plumbing components such as packings for faucets, combination faucets, pump components, pipe joints, water flow control valves, relief valves, water temperature sensors, water flow sensors and water meter housings; automobile and vehicle-related components such as valve alternator terminals, alternator connectors, IC regulators, potentiometer bases for light dimmers, various valves including emission valves, various pipes for fuel, exhaust system, and air intake system, air intake nozzle snorkels, intake manifolds, fuel pumps, engine coolant joints, carburetor main bodies, carburetor spacers, emission sensors, coolant sensors, oil temperature sensors, throttle position sensors, crankshaft position sensors, air flowmeters, brake pad wear sensors, thermostat bases for air conditioners, hot air flow control valves, brush holders for radiator motors, water pump impellers, turbine vanes, windshield wiper motor-related components, distributors, starter switches, starter relays, transmission wire harnesses, windshield washer fluid nozzles, air conditioner panel switch plates, fuel solenoid valve coils, fuse connectors, horn terminals, electric component insulators, step motor rotors, lamp sockets, lamp reflectors, lamp housings, brake pistons, solenoid bobbins, engine oil filters, fuel tanks, ignition cases, vehicle speed sensors and cable liners; and other various applications.

The PAS film has good mechanical properties, good electric properties and a high heat resistance and may be used favorably in various applications including applications of dielectric films such as film capacitors and chip capacitors, applications of circuit boards and insulating substrates, applications of motor insulation films, applications of transformer insulation films and applications of mold release films.

The PAS monofilament or short fiber may be used favorably in various applications including paper dryer canvas, net conveyor, bag filter and insulating paper.

Examples

The following describes the embodiment of the invention more specifically with reference to examples. These examples are, however, only illustrative and are not restrictive.

<Measurement of Molecular Weight>

The molecular weights of the PAS and the PAS sulfide prepolymer were measured by gel permeation chromatography (GPC) and were calculated in polystyrene conversion. The following provides measurement conditions of GPC:

Apparatus: SSC-7110 manufactured by Senshu Scientific Co., Ltd.
Column: Shodex UT 806M x 2 manufactured by Senshu Scientific Co., Ltd.
Eluent: 1-chloronaphthalene
Detector: differential refractive index detector
Column temperature: 210°C
Pre-thermostatic bath temperature: 250°C
Pump thermostatic bath temperature: 50°C

Detector temperature: 210°C
Flow rate: 1.0 mL/min
Sample injection volume: 300 μL (in slurry: about 0.2% by weight)

<Measurement of Weight Reduction Ratio of PAS on Heating>

The weight reduction ratio of the PAS on heating was measured under the following conditions using a thermogravimetric analyzer. The sample used was fine particles of not larger than 2 mm:

Apparatus: TGA7 manufactured by PerkinElmer Co., Ltd.
Atmosphere for measurement: under nitrogen stream
Weight of fed sample: about 10 mg

Measurement conditions:

(a) keeping at a programmed temperature of 50°C for 1 minute; and
(b) raising the temperature from the programmed temperature of 50°C to 400°C with a temperature rise rate of 20°C/minute.

The weight reduction ratio ΔWr was calculated according to the following equation from the sample weight at temperature reaching 330°C relative to the sample weight at temperature of 100°C in the temperature raising (b):

$$\Delta Wr = (W1 - W2) / W1 \times 100(\%)$$

(where ΔWr denotes a weight reduction ratio (%) and is a value calculated from a sample weight (W2) at temperature reaching 330°C relative to a sample weight (W1) at temperature reaching 100°C in thermogravimetric analysis at a temperature rise rate of 20°C/ minute in a non-oxidizing atmosphere at ordinary pressure).

<Quantitative Determination of Halogen Content>

The halogen contents included in the PAS and the PAS prepolymer were quantitatively determined by the following method in conformity with JEITAET-7304A:

(a) combusting a sample in a flask filled with oxygen;
(b) absorbing the combustion gas in a solution to prepare an absorbing solution; and
(c) analyzing part of the absorbing solution by ion chromatography to quantitatively determine the halogen concentration.

[Combustion and Absorption Conditions]

Apparatus: AQF-100, GA-100 (manufactured by Mitsubishi Chemical Corporation)
Sample amount: 0.5 to 1.5 mg
Absorbing solution: 10 mL

[Ion Chromatography - Anion Analysis Method]

Apparatus DX 320 (manufactured by DIONEX Corporation)
Column: DIONEX Ion Pac AS12a, DIONEX Ion Pac AS 16
Flow rate: 1.5 mL/min
Sample injection volume: 100 μL

<Measurement of Total Nitrogen Content>

Nitrogen monoxide produced by thermal decomposition and oxidation of 10 mg of PAS introduced into an analyzer was measured by chemiluminescence:

Apparatus: ND-100 (manufactured by Mitsubishi Chemical Corporation)
Thermal decomposition temperature: 800°C
Temperature of catalyst site: 900°C
Oxygen flow rate: 200 mL/min
Argon flow rate: 400 ml/min

<Measurement of MFR>

The melt flow rate (MFR) was measured according to ASTM-D1238-70. The measurement was performed under the condition of 315.5°C using a melt indexer manufactured by Toyo Seiki Seisaku-sho Ltd. (orifice having the pore length of 8.00 mm and the pore diameter of 2.095 mm, the sample amount of 7 g, the preheating time of 5 minutes after sample feeding and before start of measurement, and the load of 5000 g).

An MFR change rate ΔMFR was calculated according to the following equation, where MFR1 denotes an MFR before oxidation treatment and MFR2 denotes an MFR after the oxidation treatment:

$$\Delta MFR = MFR1 / MFR2 \times 100(\%)$$

<Oxidation Treatment>

The particles of PAS having the particle diameter of 2.00 to 1.70 mm were subjected to heat treatment at 230°C under atmosphere for 6 hours. The particles used here having the particle diameter of 2.00 to 1.70 mm were obtained by a dry mechanical sieving method using sieves having the apertures of 4.75 mm, 2.36 mm, 2.00 mm, 1.70 mm and 1.18 mm (all in cylindrical shape of 75 mm in diameter) and a vibrating sieve shaker (manufactured by AS ONE Corporation, trade name of compact vibrating sieve shaker MVS-1). More specifically, the sieves were stacked such that the sieve having the larger aperture was located on the upper level, and 20 g of particles to be measured were placed in the uppermost sieve and were shaken for 10 minutes with the vibrating sieve shaker.

<Measurement of Cyclic PAS Content Rate>

The cPPS content rates and the numbers of repeating units of the cyclic PAS included in the recovered product and included in the PAS and the amounts of impurities were subjected to qualitative and quantitative analyses using HPLC. The following measurement conditions were employed for HPLC:

Apparatus: LC-10 Δvp series manufactured by Shimadzu Corporation
Column: Mightysil RP-18 GP150-4.6 (5 μm)
Detector: Photo diode array detector (UV= 270 nm)

[Example 1]

This Example describes an example that synthesized and recovered a cyclic PAS and obtained a PAS by thermal polymerization of the cyclic PAS.

<Synthesis of Cyclic PAS>

A reaction mixture was prepared by feeding 1.97 kg of a 48% by weight of sodium hydrosulfide aqueous solution (16.87 mol as sodium hydrosulfide) as the sulfidizing agent (b), 1.48 kg of a 48% by weight of sodium hydroxide aqueous solution (17.71 mol as sodium hydroxide), 2.48 kg (16.87 mol) of p-dichlorobenzene (p-DCB) as the dihalogenated aromatic compound (c) and 42 kg (423.5 mol) of N-methyl-2-pyrrolidone (NMP) as the nitrogen-containing organic polar solvent (d) in a stainless steel autoclave equipped with an agitator. The water content included in the raw material was 1.79 kg (99.4 mol). The amount of the solvent per 1 mol of the sulfur content in the reaction mixture (i.e., per 1 mol of sulfur atom included in the sodium hydrosulfide fed as the sulfidizing agent (b)) was about 2.43 L. The amount of arylene

unit (corresponding to p-DCB fed as the dihalogenated aromatic compound (c)) per 1 mol of the sulfur content in the reaction mixture (i.e., per 1 mol of sulfur atom included in the sodium hydrosulfide fed as the sulfidizing agent (b)) was 1.00 mol.

The inside of the autoclave was substituted with nitrogen gas and was then sealed, and the autoclave was heated from room temperature to 200°C in about 1 hour with stirring at 400 rpm. The temperature was subsequently further increased from 200°C to 250°C in about 0.5 hours. The internal pressure of the reaction vessel was 1.0 MPa as the gauge pressure in this stage. The autoclave was then kept at 250°C for 2 hours, so that the reaction mixture was reacted by heating.

An NMP solution of p-DCB (prepared by dissolving 247.8 g of p-DCB in 700 g of NMP) was fed in a small-size tank placed above the autoclave via a high-pressure valve. After the internal pressure of the small-size tank was increased to about 1.5 MPa, a valve in a lower portion of the tank was opened to feed the NMP solution of p-DCB into the autoclave. The wall surface of the small-size tank was washed with 350 g of NMP, and the NMP used for washing was also fed into the autoclave. As the result of this operation, the arylene unit per 1 mol of the sulfur content in the reaction mixture (corresponding to the total amount of p-DCB fed as the dihalogenated aromatic compound (c)) amounted to 1.10 mol. After completion of this additional feeding, the reaction further proceeded by continuously heating at 250°C for another one hour. The autoclave was subsequently cooled down to 230°C in about 15 minutes, and the high-pressure valve located in an upper portion of the autoclave was then gradually opened to discharge the vapor mainly consisting of NMP. This vapor content was aggregated in a water cooling tube, so that about 27.58 kg of a liquid component was recovered. The high-pressure valve was subsequently closed to seal the autoclave. The autoclave was then rapidly cooled down to about room temperature, and a reaction product was recovered.

Part of the reaction product thus obtained was dispersed in a large excess of water, so that a water insoluble content was recovered. A solid content was obtained by drying the recovered water insoluble content. As the result of structural analysis by infrared spectroscopy, this solid content was identified as a compound having an arylene sulfide unit.

<Recovery of Cyclic PAS>

A PTFE membrane filter having the diameter of 142 mm and the mean pore diameter of 10 μm was set in a filter holder equipped with universal tank KST-142-UH (effective filtration area of about 113 square centimeter) manufactured by Advantec Toyo Kaisha, Ltd., and the obtained reaction product was fed in the tank. The tank was sealed and was then pressurized with nitrogen to 0.4 MPa, and solid-liquid separation was performed at 50°C.

A 1000 g aliquot of the filtrate content (2 wt% as the concentration of the cyclic PAS (a)) was fed in a 3 L flask, and the inside of the flask was substituted with nitrogen. The filtrate content was subsequently heated to 100°C with stirring and was then cooled down to 80°C. While the filtrate content was continuously stirred at the internal temperature of 80°C, 330 g of a 5% by weight of (1.25 normal) sodium hydroxide aqueous solution was slowly added dropwise in about 15 minutes with a pump. The weight ratio of NMP to the aqueous solution was 75 to 25 in the filtrate mixture after the dropwise addition of the sodium hydroxide aqueous solution. In the process of addition of water to the filtrate, the temperature of the mixture decreased to about 75°C accompanied with the dropwise addition of water, and a solid content was gradually produced in the mixture. At the time when the dropwise addition of water was completed, the solid content was dispersed to form a slurry. This slurry was cooled down with stirring to about 30°C in about one hour and was then continuously stirred at the temperature of not higher than 30°C for about 30 minutes. The resulting slurry was suction-filtered through a glass filter having the aperture of 10 to 16 μm. A solid content thus obtained (including the mother liquor) was dispersed in about 300 g of water, was stirred at 70°C for 15 minutes, and was suction-filtered through the glass filter as described above. This series of operations was repeated a total of four times. A resulting solid content was treated at 70°C in a vacuum dryer for 3 hours. This gave a dried solid as the cyclic PAS.

The result of analysis of the dried solid by HPLC provided detection of cyclic PAS having the numbers of repeating units of 4 to 15. The content ratio of the cyclic PAS in the dried solid was 90% by weight. The obtained dried solid was thus identified as cyclic PAS of the high purity. The content ratio of the linear PAS in this dried solid was 10% by weight. A required amount of the cyclic PAS was obtained by repeating this series of operations for recovery of cyclic PAS.

<Thermal Polymerization of Cyclic PAS>

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 98%, and the resulting PAS had the weight-average molecular weight of 55000 and the

polydispersity of 2.40. As the result of elemental analysis, no halogen other than chlorine was detected. The nitrogen content was 140 ppm. As the result of measurement of the weight reduction ratio on heating of the obtained product, ΔWr was 0.042%. The obtained product was treated by oxidation treatment at 230°C for 6 hours. As the result of MFR measurement of the oxidation treated product, ΔMFR was 159%.

As shown by this Example, the PAS obtained by the method according to the embodiment of the invention has a narrow distribution of molecular weight, a high molecular weight, a high purity and a high thermal oxidation resistance.

[Example 2]

Example 2 describes an example that synthesized and recovered a cyclic PAS and obtained a PAS by thermal polymerization of the cyclic PAS like Example 1, except that the amount of the 48% by weight of sodium hydroxide aqueous solution was changed to 1.43 kg (17.21 mol as sodium hydroxide) in synthesis of the cyclic PAS of Example 1.

The result of analysis of a dried solid thus obtained by HPLC provided detection of cyclic PAS having the numbers of repeating units of 4 to 15. The content ratio of the cyclic PAS in the dried solid was 86% by weight. The obtained dried solid was thus identified as cyclic PAS of the high purity. The content ratio of the linear PAS in this dried solid was 14% by weight.

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 97%, and the resulting PAS had the weight-average molecular weight of 56000 and the polydispersity of 2.43. As the result of elemental analysis of the product, no halogen other than chlorine was detected. The nitrogen content was 99 ppm.

As shown by this Example, performing both the process 1b and the process 2 provides the PAS having the further reduced nitrogen content.

[Example 3]

Example 3 describes an example that synthesized and recovered a cyclic PAS and obtained a PAS by thermal polymerization of the cyclic PAS like Example 2, except that the reaction time after addition of p-DCB was changed to 4 hours in synthesis of the cyclic PAS of Example 2.

The result of analysis of a dried solid thus obtained by HPLC provided detection of cyclic PAS having the numbers of repeating units of 4 to 15. The content ratio of the cyclic PAS in the dried solid was 88% by weight. The obtained dried solid was thus identified as cyclic PAS of the high purity. The content ratio of the linear PAS in this dried solid was 12% by weight.

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 94%, and the resulting PAS had the weight-average molecular weight of 55000 and the polydispersity of 2.40. As the result of elemental analysis of the product, no halogen other than chlorine was detected. The nitrogen content was 87 ppm.

As shown by this Example, extension of the reaction time to make the reaction further proceed provides the PAS having the less nitrogen content than that of the PAS of Example 2.

[Example 4]

Example 4 describes an example that synthesized and recovered a cyclic PAS and obtained a PAS by thermal polymerization of the cyclic PAS like Example 2, except that the 5% by weight of (1.25 normal) sodium hydroxide aqueous solution was replaced with ion exchanged water in recovery of the cyclic PAS of Example 2.

The result of analysis of a dried solid thus obtained by HPLC provided detection of cyclic PAS having the numbers of repeating units of 4 to 15. The content ratio of the cyclic PAS in the dried solid was 85% by weight. The obtained dried solid was thus identified as cyclic PAS of the high purity. The content ratio of the linear PAS in this dried solid was 15% by weight.

A 20 g aliquot of the obtained white powder was fed in a glass vial, and the inside of the vial was substituted with nitrogen. The vial was placed in an electric oven at the temperature controlled to 340°C to be heated for 240 minutes

and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 98%, and the resulting PAS had the weight-average molecular weight of 46800 and the polydispersity of 2.44. As the result of elemental analysis of the product, no halogen other than chlorine was detected. The nitrogen content was 170 ppm.

As the result of measurement of the weight reduction ratio on heating of the obtained product, ΔWr was 0.031%. The obtained product was treated by oxidation treatment at 230°C for 6 hours. As the result of MFR measurement of the oxidation treated product, ΔMFR was 188%.

As shown by this Example, even employing only the process 1b without employing the process 2 provides the PAS having a narrow distribution of molecular weight, a high molecular weight, a high purity and a high thermal oxidation resistance.

[Example 5]

Example 5 describes an example that synthesized and recovered a cyclic PAS and obtained a PAS by thermal polymerization of the cyclic PAS like Example 3, except that the 5% by weight of (1.25 normal) sodium hydroxide aqueous solution was replaced with ion exchanged water in recovery of the cyclic PAS of Example 3.

The result of analysis of a dried solid thus obtained by HPLC provided detection of cyclic PAS having the numbers of repeating units of 4 to 15. The content ratio of the cyclic PAS in the dried solid was 87% by weight. The obtained dried solid was thus identified as cyclic PAS of the high purity. The content ratio of the linear PAS in this dried solid was 13% by weight.

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 93%, and the resulting PAS had the weight-average molecular weight of 61000 and the polydispersity of 2.22. As the result of elemental analysis of the product, no halogen other than chlorine was detected. The nitrogen content was 140 ppm.

As the result of measurement of the weight reduction ratio on heating of the obtained product, ΔWr was 0.028%. The obtained product was treated by oxidation treatment at 230°C for 6 hours. As the result of MFR measurement of the oxidation treated product, ΔMFR was 162%.

As shown by this Example, extension of the reaction time to make the reaction further proceed provides the PAS having the less nitrogen content than that of the PAS of Example 5.

[Example 6]

Example 6 describes an example that synthesized and recovered a cyclic PAS and obtained a PAS by thermal polymerization of the cyclic PAS like Example 2, except that a 1.0 normal diluted hydrochloric acid aqueous solution was added dropwise, in place of the 5% by weight of (1.25 normal) sodium hydroxide aqueous solution in recovery of the cyclic PAS of Example 2.

The result of analysis of a dried solid thus obtained by HPLC provided detection of cyclic PAS having the numbers of repeating units of 4 to 15. The content ratio of the cyclic PAS in the dried solid was 86% by weight. The obtained dried solid was thus identified as cyclic PAS of the high purity. The content ratio of the linear PAS in this dried solid was 14% by weight.

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 94%, and the resulting PAS had the weight-average molecular weight of 51000 and the polydispersity of 2.42. As the result of elemental analysis of the product, no halogen other than chlorine was detected. The nitrogen content was 195 ppm.

As shown by this Example, employing the process 2 using an acid solution provides the PAS having a narrow distribution of molecular weight, a high molecular weight, a high purity and a high thermal oxidation resistance.

[Comparative Example 1]

Comparative Example 1 describes an example that obtained a PAS by a known manufacturing method of PAS or more specifically obtained a PAS by reaction of a sulfur source with a dihalo aromatic compound in an organic amide solvent in the presence of an alkali metal hydroxide.

In a 70-liter autoclave equipped with an agitator, 8.27 kg (70.0 mol) of a 48% by weight of sodium hydrosulfide aqueous solution, 2.96 kg (71.0 mol) of 96% sodium hydroxide, 11.44 kg (116 mol) of N-methyl-2-pyrrolidone (hereinafter may be abbreviated as NMP), 1.72 kg (21.0 mol) of sodium acetate and 10.5 kg of ion exchanged water were fed. After attachment of a rectifying column to the autoclave, stirring the reaction vessel was started at 240 rpm. The reaction vessel was gradually heated to the internal temperature of 235°C in about 3 hours at ordinary pressure with the stream of nitrogen. After 14.8 kg of water and 280 g of NMP were distilled out via the rectifying column, the reaction vessel was cooled down to about 160°C. This deliquoring operation caused 0.02 mol of hydrogen sulfide per 1 mol of the fed sulfur content to be flowed out of the system.

After addition of 10.3 kg (70.3 mol) of p-dichlorobenzene (p-DCB) and 9.00 kg (91.0 mol) of NMP, the reaction vessel was sealed under the nitrogen gas. The reaction vessel was heated to 200°C in about 30 minutes and was subsequently further heated from 200°C to 270°C at a rate of 0.6°C/ minute with stirring at 240 rpm. The reaction continued at 270°C for 140 minutes. While the reaction vessel was cooled down to 250°C in 15 minutes, 26.3 kg of water was injected into the system. The reaction vessel was subsequently cooled down from 250°C to 220°C at a rate of 0.4°C/ minute. The reaction vessel was then rapidly cooled down to about room temperature, and a slurry (A) was obtained. A slurry (B) was then obtained by diluting this slurry (A) with 500 g of NMP.

A 1000 g aliquot of the slurry (B) was heated to 85°C and was stirred for about 30 minutes. The slurry was then filtered through an 80 mesh stainless steel sieve, so that about 750 g of a crude PAS resin and a slurry (C) were obtained.

A 100 g aliquot of the obtained crude PAS resin was washed at 85°C for 30 minutes by addition of about 0.25 liters of NMP, and the mixture was then filtered through a sieve (80 mesh, aperture of 0.175 mm). A solid substance thus obtained was diluted with 0.5 liters of ion exchanged water, was stirred at 70°C for 30 minutes and was then filtered through an 80 mesh sieve for recovery of a solid substance. This series of operations was repeated a total of five times. A resulting solid substance was dried with hot air at 130°C, so that a dried polymer was obtained. The obtained polymer was identified as PAS by infrared spectroscopic analysis.

As the result of GPC measurement of the dried polymer, the obtained PAS had the weight average molecular weight of 47600 and the polydispersity of 3.40. As the result of elemental analysis of the dried polymer, no halogen other than chlorine was detected. The nitrogen content was 800 ppm. As the result of measurement of the weight reduction ratio on heating of the obtained PAS, $\Delta$Wr was 0.345%. The obtained product was treated by oxidation treatment at 230°C for 6 hours. As the result of MFR measurement of the oxidation treated product, $\Delta$MFR was 564%.

[Comparative Example 2]

Comparative Example 2 describes an example that obtained a PAS by thermal polymerization of a cyclic PAS that was obtained by extraction from the side product in production of the PAS of Comparative Example 1.

The slurry (C) obtained in Comparative Example 1 was fed in a rotary evaporator, was treated at 100 to 160°C under reduced pressure for 1.5 hours after substitution of the atmosphere with nitrogen, and was subsequently treated at 160°C in a vacuum dryer for 1 hour. The NMP content in a resulting solid substance was 3% by weight.

This solid substance was slurried again by adding 900 g (1.2-fold amount of the slurry (C)) of ion exchanged water to the solid substance and stirring the mixture at 70°C for 30 minutes. This slurry was suction-filtered through a glass filter having the aperture of 10 to 16 $\mu$m. The obtained white cake was slurried again by adding 900 g of ion exchanged water and stirring the mixture at 70°C for 30 minutes. The slurry was similarly suction-filtered and was vacuum dried at 70°C for 5 hours, so that a PAS oligomer was obtained.

A 20 g aliquot of the obtained PAS oligomer was subjected to soxhlet extraction with 120 g of chloroform for 3 hours. A solid was obtained by distilling out chloroform from the resulting extract, and 100 g of chloroform was then added again to the solid. A slurried mixed solution was obtained by mixing the solid with chloroform at room temperature. The slurried mixed solution was slowly added dropwise to 1000 g of methanol with stirring. The precipitate thus obtained was suction-filtered through a glass filter having the aperture of 10 to 16 $\mu$m. The obtained white cake was vacuum dried at 70°C for 3 hours, and white powder was obtained. A required amount of the white powder was obtained by repeating this series of operations.

This white powder was fully soluble in 1-chloronaphthalene at room temperature and had the weight-average molecular weight of 900, the Na content of 4 ppm and the chlorine content of 2.2 wt%. The amount of alkali metals other than Na and the amount of halogens other than chlorine were not greater than the detection limits. This white powder was identified as PAS by absorption spectra in infrared spectroscopic analysis. As the result of analysis of the thermal property of this white powder using a differential scanning calorimeter (at a temperature rise rate of 40°C/ minute), the

white powder had broad absorption of heat in about 200 to 260°C with a peak temperature of about 215°C.

This white powder was identified as a mixture consisting of cyclic PAS having the numbers of repeating units of 4 to 11 and linear PAS having the numbers of repeating units of 2 to 11, based on mass spectroscopy analysis of components divided by high-performance liquid chromatography and molecular weight information by MALDI-TOF-MS. The weight ratio of the cyclic PAS to the linear PAS was about 9 to 1. This indicates that the obtained white powder includes about 90% by weight of the cyclic PAS and about 10% by weight of the linear PAS.

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 98%, and the resulting PAS had the weight-average molecular weight of 48000 and the polydispersity of 2.43. As the result of elemental analysis of the obtained product, no halogen other than chlorine was detected. The nitrogen content was 650 ppm. As the result of measurement of the weight reduction ratio on heating of the obtained product, $\Delta Wr$ was 0.040%. The obtained product was treated by oxidation treatment at 230°C for 6 hours. As the result of MFR measurement of the oxidation treated product, $\Delta MFR$ was 483%.

[Comparative Example 3]

Comparative Example 3 describes an example that synthesized and recovered a cyclic PAS and obtained a PAS by thermal polymerization of the cyclic PAS like Example 1, except that the 5% by weight of (1.25 normal) sodium hydroxide aqueous solution was replaced with ion exchanged water in recovery of the cyclic PAS of Example 1.

The result of analysis of a dried solid thus obtained by HPLC provided detection of cyclic PAS having the numbers of repeating units of 4 to 15. The content ratio of the cyclic PAS in the dried solid was about 86% by weight. The obtained dried solid was thus identified as cyclic PAS of the high purity. The content ratio of the linear PAS in this dried solid was 14% by weight.

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 97%, and the resulting PAS had the weight-average molecular weight of 53500 and the polydispersity of 2.35. As the result of elemental analysis of the product, no halogen other than chlorine was detected. The nitrogen content was 350 ppm. As the result of measurement of the weight reduction ratio on heating of the obtained product, $\Delta Wr$ was 0.037%. The obtained product was treated by oxidation treatment at 230°C for 6 hours. As the result of MFR measurement of the oxidation treated product, $\Delta MFR$ was 305%.

[Comparative Example 4]

Comparative Example 4 describes an example that synthesized and recovered a cyclic PAS and obtained a PAS by thermal polymerization of the cyclic PAS like Example 1, except that the 5% by weight of (1.25 normal) sodium hydroxide aqueous solution was replaced with ion exchanged water and the reaction time after addition of p-DCB was changed to four hours in recovery of the cyclic PAS of Example 1.

The result of analysis of a dried solid thus obtained by HPLC provided detection of cyclic PAS having the numbers of repeating units of 4 to 15. The content ratio of the cyclic PAS in the dried solid was about 88% by weight. The obtained dried solid was thus identified as cyclic PAS of the high purity. The content ratio of the linear PAS in this dried solid was 12% by weight.

A 20 g aliquot of the obtained white powder was fed in a glass vial, and the inside of the vial was substituted with nitrogen. The vial was placed in an electric oven at the temperature controlled to 340°C to be heated for 240 minutes and was then taken out and cooled down to room temperature. The product was identified as PAS by infrared spectroscopy. The product was fully soluble in 1-chloronaphthalene at 210°C. As the result of GPC measurement, a peak derived from the PAS prepolymer and a peak derived from the produced polymer (PAS) were observed. The conversion ratio of the prepolymer to PAS was 95%, and the resulting PAS had the weight-average molecular weight of 54700 and the polydispersity of 2.39. As the result of elemental analysis of the product, no halogen other than chlorine was detected. The nitrogen content was 270 ppm. As the result of measurement of the weight reduction ratio on heating of the obtained product, $\Delta Wr$ was 0.035%. The obtained product was treated by oxidation treatment at 230°C for 6 hours. As the result of MFR measurement of the oxidation treated product, $\Delta MFR$ was 253%.

As clearly shown by these Comparative Examples, even when the PAS is highly polymerized and the impurity

content is reduced, the conventional technique provides the PAS having the nitrogen content of not less than 200 ppm and ΔMFR of over 200%, which indicates a low thermal oxidation resistance.

Industrial Applicability

The PAS according to the embodiment of the invention has a high heat resistance, a high thermal oxidation resistance, a high chemical resistance, a high flame retardancy, good electric properties and good mechanical properties, and more specifically has the narrower distribution of molecular weight, the less amount of gas generation on heating and the better thermal oxidation resistance and the better melt stability than those of the conventional PAS. The PAS according to the embodiment of the invention accordingly has extremely good molding processability, extremely good mechanical properties and extremely good electric properties. The PAS is not only applicable to injection molding, injection compression molding and blow molding but is moldable and usable for extrusion molded products such as sheets, films, fibers and pipes by extrusion molding.

## Claims

**1.** A polyarylene sulfide configured to satisfy (1) to (4):

(1) having a weight-average molecular weight of not less than 10000;
(2) having a polydispersity of not greater than 2.5, wherein the polydispersity is expressed by a ratio of the weight-average molecular weight to a number-average molecular weight;
(3) having a weight reduction on heating that satisfies an expression given below:

$$\Delta Wr = (W1 - W2)/ W1 \times 100 \leq 0.18(\%)$$

(where ΔWr denotes a weight reduction ratio (%) and is a value calculated from a sample weight (W2) at temperature reaching 330°C relative to a sample weight (W1) at temperature reaching 100°C in thermogravimetric analysis at a temperature rise rate of 20°C/ minute in a non-oxidizing atmosphere at ordinary pressure); and
(4) having a nitrogen content of not greater than 200 ppm.

**2.** The polyarylene sulfide according to claim 1, the polyarylene sulfide further satisfying an expression given below:

$$\Delta MFR = MFR1/ MFR2 \times 100 \leq 200(\%)$$

(where ΔMFR denotes a change rate in melt flow rate (hereinafter referred to as MFR) and is a value calculated from a melt flow rate (MFR1) without oxidation treatment and a melt flow rate (MFR2) after oxidation treatment (230°C under atmosphere for 6 hours) in measurement of MFR (g/ 10 min) under application of a load of 5 kg after heating at 315.5°C under atmosphere at ordinary pressure for 5 minutes, and the measurement of MFR is performed under a load of 5 kg at a temperature of 315.5°C in conformity with ASTMD-1238-70).

**3.** The polyarylene sulfide according to either claim 1 or claim 2, the polyarylene sulfide including substantially no halogen other than chlorine.

**4.** A manufacturing method of a polyarylene sulfide, comprising:

a process of heating a polyarylene sulfide prepolymer, so as to convert the polyarylene sulfide prepolymer into a high polymer having a weight-average molecular weight of not less than 10000, wherein
the polyarylene sulfide prepolymer includes at least not less than 50% by weight of a cyclic polyarylene sulfide (a) obtained through a process 1b and/or a process 2 and has a weight-average molecular weight of less than 10000, wherein
a process 1a denotes a process that causes at least a sulfidizing agent (b) and a dihalogenated aromatic compound (c) to be exposed to each other in a nitrogen-containing organic polar solvent (d), so as to obtain the cyclic polyarylene sulfide (a);

the process 1b denotes a process that performs the process 1a with addition of 0.95 to 1.04 mol of an alkali metal hydroxide (e) relative to 1 mol of the sulfidizing agent (b); and
the process 2 denotes a process that adds an alkaline solution (e) or an acid solution (f) different from the nitrogen-containing organic polar solvent (d) to a solution of the nitrogen-containing organic polar solvent (d) including at least the cyclic polyarylene sulfide (a) obtained through the process 1a or the process 1b, so as to recover the cyclic polyarylene sulfide (a) as a solid content.

**5.** The manufacturing method of the polyarylene sulfide according to claim 4,
wherein an amount of the nitrogen-containing organic polar solvent (d) used in the process 1a is between 1.25 liters and 50 liters inclusive per 1 mol of a sulfur content in a reaction mixture that is reacted in the process 1a.

**6.** The manufacturing method of the polyarylene sulfide according to either claim 4 or claim 5, the manufacturing method further comprising:

a process of recovering a solution including at least the cyclic polyarylene sulfide (a) by solid-liquid separation of a reaction mixture obtained by the process 1a at temperature of not higher than a reflux temperature of the nitrogen-containing organic polar solvent (d) at ordinary pressure.

**7.** The manufacturing method of the polyarylene sulfide according to any one of claims 4 to 6,
wherein the nitrogen-containing organic polar solvent (d) is an organic amide solvent.

**8.** The manufacturing method of the polyarylene sulfide according to any one of claims 4 to 7,
wherein the alkaline solution (e) is a solution including an alkali metal hydroxide or an alkaline earth metal hydroxide.

**9.** The manufacturing method of the polyarylene sulfide according to any one of claims 4 to 7,
wherein the acid solution (f) is a solution including an inorganic acid or a carboxylic acid.

**10.** The manufacturing method of the polyarylene sulfide according to any one of claims 4 to 9,
wherein a solvent of the alkaline solution (e) or the acid solution (f) is a protic solvent.

**11.** The manufacturing method of the polyarylene sulfide according to any one of claims 4 to 10, the manufacturing method further comprising:

a process of performing solid-liquid separation of the cyclic polyarylene sulfide (a) after adding the alkaline solution (e) or the acid solution (f).

**INTERNATIONAL SEARCH REPORT**

International application No. PCT/JP2015/003286

A. CLASSIFICATION OF SUBJECT MATTER

*C08G75/02*(2006.01)i

According to International Patent Classification (IPC) or to both national classification and IPC

B. FIELDS SEARCHED

Minimum documentation searched (classification system followed by classification symbols)

C08G75/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 05-105757 A (Tosoh Corp.),<br>27 April 1993 (27.04.1993),<br>claim 1; paragraphs [0008], [0022]; paragraph [0037] to paragraph [0053], table 1<br>(Family: none) | 1-3<br>4-11 |
| X<br>A | JP 05-163349 A (Tosoh Corp.),<br>29 June 1993 (29.06.1993),<br>claims 1 to 3; paragraphs [0040], [0063] to [0065]<br>& US 5384391 A & EP 527055 A2 | 1-3<br>4-11 |
| X | WO 2013/128908 A1 (Toray Industries, Inc.),<br>06 September 2013 (06.09.2013),<br>claims 1 to 12; paragraphs [0146] to [0160]<br>& US 2015/0057429 A1 & EP 2821427 A1 | 1-11 |

☒ Further documents are listed in the continuation of Box C. ☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 30 September 2015 (30.09.15) | 13 October 2015 (13.10.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No. PCT/JP2015/003286

C (Continuation). DOCUMENTS CONSIDERED TO BE RELEVANT

| Category* | Citation of document, with indication, where appropriate, of the relevant passages | Relevant to claim No. |
|---|---|---|
| X | JP 2008-202164 A (Toray Industries, Inc.), 04 September 2008 (04.09.2008), claim 1; paragraphs [0105] to [0115] (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014134152 A
- JP 2014172348 A
- WO 2013147141 A
- WO 2010074482 A
- JP H05163349 A
- US 5869599 A
- WO 2007034800 A
- JP 2009030012 A
- JP 2009227952 A
- WO 2013061561 A
- JP 2007231255 A
- JP 2009149863 A
- JP 2010037550 A